(19) Europäisches Patentamt
European Patent Office
Office européen des brevets

(11) **EP 2 249 176 B1**

(12) **EUROPEAN PATENT SPECIFICATION**

(45) Date of publication and mention
of the grant of the patent:
**09.10.2013 Bulletin 2013/41**

(21) Application number: **10275033.8**

(22) Date of filing: **14.04.2010**

(51) Int Cl.:
*G01S 11/06* (2006.01)        *G01S 5/14* (2006.01)

(54) **Terminal positioning technique**

Endgerät-Positionierungstechnik

Technique de positionnement terminal

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **14.04.2009 GB 0906283**

(43) Date of publication of application:
**10.11.2010 Bulletin 2010/45**

(73) Proprietor: **Vodafone Group plc
Newbury, Berkshire RG14 2FN (GB)**

(72) Inventor: **Markoulidakis, Yannis
171 22, Nea Smyrni (GR)**

(74) Representative: **Boult Wade Tennant
Verulam Gardens
70 Grays Inn Road
London WC1X 8BT (GB)**

(56) References cited:
EP-A1- 1 315 393        WO-A1-03/071303
WO-A1-2006/096923

• OROOJI M ET AL: "New Method for Estimation of Mobile Location Based on Signal Attenuation and Hata Model Signal Prediction" ENGINEERING IN MEDICINE AND BIOLOGY SOCIETY, 2005. IEEE-EMBS 2005. 27T H ANNUAL INTERNATIONAL CONFERENCE OF THE SHANGHAI, CHINA 01-04 SEPT. 2005, PISCATAWAY, NJ, USA,IEEE LNKD-DOI:10.1109/IEMBS.2005.1615865, 1 September 2005 (2005-09-01), pages 6025-6028, XP010907208 ISBN: 978-0-7803-8741-6
• MARKOULIDAKIS J G ET AL: "Stamp Accuracy Enhancement Through Received Signal Strength Adaptive Kalman Filtering" IEEE INTERNATIONAL SYMPOSIUM ON PERSONAL, INDOOR AND MOBILE RADIO COMMUNICATIONS. PIMRC, IEEE; PI, XX, 1 September 2007 (2007-09-01), pages 1-5, XP031168109 ISBN: 978-1-4244-1143-6
• HATA M: "EMPIRICAL FORMULA FOR PROPAGATION LOSS IN LAND MOBILE RADIO SERVICES" IEEE TRANSACTIONS ON VEHICULAR TECHNOLOGY, IEEE SERVICE CENTER, PISCATAWAY, NJ, US, vol. VT-29, no. 3, 1 August 1980 (1980-08-01), pages 317-325, XP000647130 ISSN: 0018-9545
• MARKOULIDAKIS ET AL: "Part two: Kalman filtering options for error minimization in statistical terminal assisted mobile positioning", COMPUTER COMMUNICATIONS, ELSEVIER SCIENCE PUBLISHERS BV, AMSTERDAM, NL, vol. 31, no. 6, 26 January 2008 (2008-01-26), pages 1138-1147, XP022558968, ISSN: 0140-3664

**Description**

This invention relates to a mobile terminal positioning and/or tracking technique and associated equipment. More particularly the present invention relates to the positioning and/or tracking of a mobile communication terminal the terminal itself in a mobile communication network and associated communication network equipment. More specifically, the present invention relates to a system for and method of estimating the position of a mobile terminal in a mobile communications network.

With the increasing capacity and area coverage of cellular networks around the world, mobile telecommunications providers are able to provide new and improved services for their customers. In particular, one type of service in which there has been an increased interest in of late is Location Based Services (LBS).

LBS provide a mobile terminal user with location based content delivery, such as local weather forecasts, and can also enable the mobile terminal user to identify people or outlets near their vicinity. For instance, a mobile phone user can contact a LBS provider to identify their closest petrol station, restaurant, bank or the like, based upon the user's current mobile terminal (MT) location. Similarly, it can be used to find the location of friends or family, such as for reasons of safety or emergency, or simply meeting up, by requesting the LBS provider for a location update on one or more person. These services can assist users, by saving them time, rather than travelling around a given geographical area, looking for a particular outlet/person, thus potentially avoiding traffic jams. It can also assist people in emergency situations, such as by helping to quickly identify their nearest hospital or the location of someone requiring emergency assistance.

These services require a positioning technique that can achieve reasonable positional accuracy as well as commercially reasonable deployment costs. Such costs are generally related to the extent and complexity of additional software and hardware to be incorporated at the mobile terminals and/or in the network. There are also other issues to consider, such as any penalties imposed by the tracing techniques and procedures upon storage/memory requirements and battery power consumption at the mobile terminals.

A wide variety of mobile terminal positioning techniques have been proposed to date. The best performing positioning technique in terms of accuracy and reliability is currently the Assisted Global Positioning System (A-GPS). GPS is a technique where the terminal receives signals from a GPS satellite constellation. From the received signals, the terminal calculates its position based on the time-difference observed in the signals received from the different satellites. In A-GPS the mobile network (e.g. GSM) provides additional information through its air-interface to assist the terminal in estimating its position (e.g. differential GPS corrections). This leads to shorter "Time to First Fix" and lower terminal battery consumption.

However, A- GPS is quite a costly approach, and the relatively slow commercial uptake of Location Based Services combined with the high costs associated with GPS point towards it being a relatively long period of time before legacy 2G and 2G/ 3G mobile terminals will be equipped with GPS receivers on an extensive basis. Further, even after the introduction of GPS receivers in a large proportion of mobile terminals, since GPS requires direct contact with the satellites to function, the limited availability of satellite signals in indoor and certain outdoor environments (e.g. due to the urban canyon effect) indicate the need for hybrid techniques which combine A- GPS with a cellular based positioning.

One simple cellular based method uses the nearest cell as a means to provide an approximate terminal position. For instance the cell which provides the terminal with the strongest Received Signal Strength (RSS) measurement is determined, and the terminal is then assumed to be within the coverage area of that cell. The accuracy of this method of course depends upon the coverage area of the cell, and so will typically provide a mobile terminal position that is accurate to a range from 600m to a couple of kilometres (i.e. 600m-2000m depending on the cell size). This method is one of the techniques currently being used by operators that have already introduced commercial LBS.

Terminal positioning techniques relying on Received Signal Strength (RSS) measurements are of reduced complexity to implement due to the fact that RSS measurements are available at the terminal side as part of its standard operation in both idle and dedicated mode. The main problem with RSS based positioning techniques is in regard to the accuracy they yield because of the signal variability resulting from the stochastic nature of the mobile radio propagation environment.

In GB2416461 a technique was disclosed which was termed "Statistical Terminal Assisted Mobile Positioning" or briefly "STAMP". This technique allows for the exploitation of multiple RSS historical measurements collected while the terminal is in idle mode. During a set-up phase of a LBS, these RSS measurements are used with a positioning technique to estimate the terminal's position, and this estimate is then statistically processed so as to improve the accuracy of the determined terminal position. In this way, the "STAMP" technique was able to improve the accuracy of most existing tracing techniques, rendering them more useful for LBS applications. The STAMP technique, however, when applied over RSS measurements, is also susceptible to signal variability, particularly in regard to the multi-path effect affecting its accuracy. In GB2416461, this problem was addressed by eliminating measurements with high error content (e.g. due to fast fading).

Signal variability is particularly an issue when using STAMP with empirical models like Hata or Cost231, as these models estimate the distance between the terminal and the base station with distance being an exponential function of the RSS. Therefore, undue variability in the RSS measurements will result in drastically exaggerated estimation errors.

Whilst the STAMP technique has been found to provide a reasonable degree of positional accuracy, and to be implementable for a reasonable cost, the positional accuracy that is currently achieved could still be improved further, particularly in regard to mitigating the terminal positioning error introduced by RSS based techniques.

The method proposed in EP135393 (which is used for the two-part form delimitation) refers to the ability to use a series of measurements of Received Signal Strength (RSS) collected while the terminal is connected to the network (i.e. during a call or a data session) in order to improve the positioning accuracy. The techniques proposed in EP135393 correspond to a filtering approach which could be considered as an alternative to Kalman Filter. However the method used in this document for the estimation of the distance as a function of the RSS does not consider the employment of estimators which optimize the accuracy of the terminal positioning taking into account the filtering process applied

The method proposed in WO2006096923 exploits a generic path loss model (based on Hata, Cost231 formulation of path loss estimation) and then relies on terminal positioning to provide a method to identify the specific path loss model parameters which apply in the vicinity of the terminal location. As a result a refined path-loss model is eventually applied in order to improve the accuracy of the terminal positioning. However, the method proposed in WO2006096923 does not address the statistical behaviour of the error introduced during the terminal-base station distance estimation even when the path-loss model accuracy has been improved. Moreover the proposed present application defines statistical estimators which match the Kalman Filtering process and deliver increased positioning accuracy an approach wholly absent from the teachings of WO2006096923.

The method proposed in WO03071303 effectively corresponds to a Weighted Least Squares method over the RSS measurements from multiple Base Stations in order to optimize the resulting MT positioning. The weighting factors proposed in WO03071303 are aiming to match the expected error in distance estimation. However, WO03071303 does not provide any analysis of the expected error in terminal-base station distance estimation and does not provide any statistical estimators which could improve the terminal positioning accuracy.

The method proposed in OROOJI, M. et al; New Method for Estimation of Mobile Location Based on Signal Attenuation and Hata Model Signal Prediction; 2005 considers a set of equations to express the terminal location as a function of (a) the base station coordinates, (b) the distances between the terminal and the relevant base stations and (c) a set of angles relating the terminal position with the base station positions. The method relies on an approximation of the angles required in this set of equation which allows for the identification of the terminal position. However, the estimation of the distance between the terminal and each of the base stations does not consider any statistical estimator which would improve its accuracy. Moreover the method proposed in this paper does not provide any statistical estimators that can improve the performance of a statistical filtering process like Kalman Filtering.

There is therefore a need for an enhanced network based positioning technique which combines adequate accuracy with low deployment costs.

The present invention seeks to overcome or alleviate at least one of these problems.

Summary of the Invention

According to a first aspect, the present invention provides a method of estimating the location of a mobile terminal in a mobile communications network having a plurality of base stations, as defined in the attached claims.

Conveniently, the estimator may include a Kalman filtering component.

It is also preferable that the at least one signal parameter measurement determined is a Received Signal Strength (RSS) measurement and a RSS based positioning technique, such as Enhanced Cell Global Identity (ECGI) or STAMP, is used to obtain the first distance estimation of the mobile terminal location.

Advantageously the estimators minimise the impact of the position calculation process on the resulting accuracy of the positioning technique.

The estimators are statistical estimators that can be applied to a distance estimation of the mobile terminal from each of the base stations and/or applied to a trilateration/triangulation estimation of the actual position of the mobile terminal, based upon estimated distances of the mobile terminal from the plurality of base stations. The estimators are preferably derived by taking into account the nature of path-loss propagation models (like Hata and Cost231), the error introduced in the estimation of the Mobile Terminal-Base Station distance as well as the error introduced in the triangulation process.

Other aspects of the invention relate to a mobile telecommunications terminal and a communications network element, such as a Base Station, configured to implement the inventive aspect, particularly as set out in the attached claims.

Brief Description of the Drawings

Embodiments of the invention will now be described with reference to the accompanying drawings, in which:

Figure 1 illustrates a schematic diagram of a mobile telecommunications network in which the present invention may be implemented;

Figure 2 illustrates a flow chart of the key steps in a RSS based positioning determination process;

Figure 3 illustrates provides a graph comparing the mean squared root error of the MT-BS distance for three different variance $\sigma_{Rx}$ values (4db, 8db and 12db) for three different estimators according to different embodiments of the invention;

Figure 4 illustrates a graph comparing the performance of the RSS estimators, according to embodiments of the invention, in a RSS based positioning technique;

Figure 5 illustrates a graph comparing the performance of different RSS based positioning techniques using different estimators according to different embodiments of the invention;

Figure 6 illustrates a graph comparing the performance for different estimators according to embodiments of the invention as used in the STAMP technique;

Figure 7 illustrates a graph comparing the performance of different estimators according to embodiments of the invention as used in the MT Tracking technique; and

Figure 8 illustrates the comparative performance of CGI, CGI+TA and ECGI, STAMP and MT Tracking utilising the estimators calculated according to an embodiment of the invention;

Figure 9 relates to embodiments of the invention where Kalman filtering is applied to the different estimators, and illustrates a graph comparing the RSS Kalman filter gain factor $f_{Rx}$ versus RSS standard deviation $\sigma_{Rx}$ for a theoretical steady state Kalman Filtering performance as well as an actual simulation;

Figure 10 illustrates an RSS Kalman Filtering Equivalent Mobile Terminal Position Calculation Model (Option A) according to an embodiment of the invention;

Figure 11 illustrates an MT-BS Distance Kalman Filtering Equivalent Mobile Terminal Position Calculation Model (Option B) according to an embodiment of the invention;

Figure 12 illustrates an MT Coordinates Kalman Filtering Equivalent Mobile Terminal Position Calculation Model (Option C) according to an embodiment of the invention; and

Figure 13 illustrates a graph of the comparative performance, from a simulation, of the best performing estimators for the Kalman Filtering embodiments of the invention and Plain RSS embodiments of the invention.

Detailed Description of Embodiments of the Invention

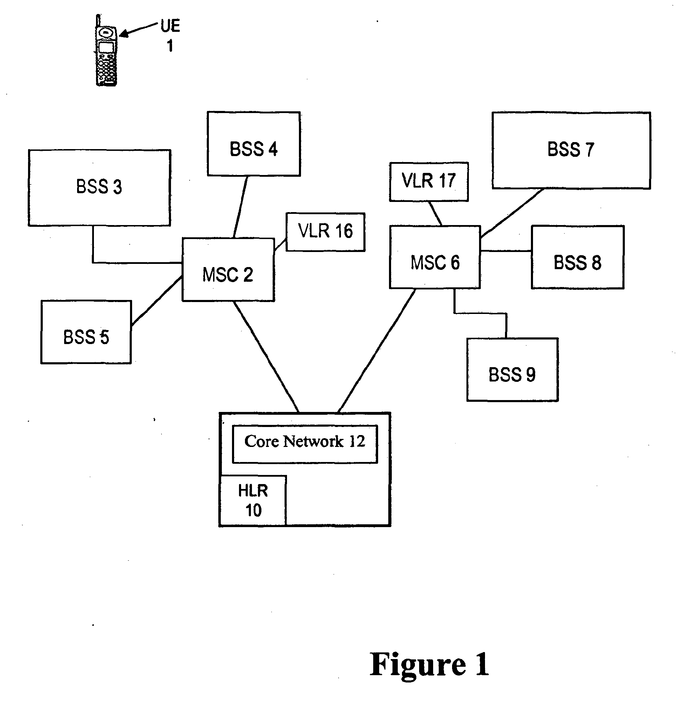

Key elements of a mobile telecommunications network, and its operation, will now briefly be described with reference to Figure 1.

Each cell corresponds to a respective base station (BS) of its cellular or mobile telecommunications network that receives calls from and terminates calls at any mobile terminal in that cell by wireless radio communication in one or both of the circuit switched or packet switched domains. Such a subscriber's mobile terminal or User Equipment (UE) is shown at 1. The mobile terminal may be any portable communication device such as a handheld mobile telephone, a personal digital assistant (PDA) or a laptop computer equipped with a network datacard.

In a GSM mobile telecommunications network, the base station subsystem (BSS) comprises of the base transceiver stations (BTS) and the base station controller (BSC). A BSC may control more than one BTS. The BTSs and BSCs comprise the radio access network.

The present invention will be described in relation to a GSM network, although it is to be appreciated that the inventive concepts can readily be applied to other mobile network arrangements, including UMTS and SAE/LTE.

Conventionally, in a GSM network, the base stations are arranged in groups and each group of base stations is controlled by one mobile switching centre (MSC), such as MSC 2 for base stations 3, 4 and 5. As shown in Figure 1, the network has another MSC 6, which is controlling a further three base stations 7, 8 and 9. In practice, the network will incorporate many more MSCs and base stations than shown in Figure 1. The base stations 3, 4, 5, 7, 8 and 9 each have dedicated (not shared) connection to their MSC2 or MSC6- typically a cable connection. This prevents transmission speeds being reduced due to congestion caused by other traffic.

Each subscriber to the network is provided with a smart card or SIM which, when associated with the user's mobile terminal identifies the subscriber to the network. The SIM card is pre-programmed with a unique identification number, the "International Mobile Subscriber Identity" (IMSI) which is not visible on the card and is not generally known to the subscriber. The subscriber is issued with a publicly known number, that is, the subscriber's telephone number, by means of which calls to the subscriber are initiated by callers. This number is the MSISDN.

The core network 12 includes a home location register (HLR) 10 which, for each subscriber to the network, stores the IMSI and the corresponding MSISDN together with other subscriber data, such as the current or last known Location Area of the subscriber's mobile terminal.

When a mobile terminal is in idle mode it selects one cell to be synchronised with (the primary cell) based on the strongest received signal strength. To achieve this, the terminal periodically monitors the received signal strength from the primary and a set of up to six neighbouring cells. As the terminal moves, the set of monitored cells as well as the primary cell may change.

Whenever a mobile terminal (being in idle mode) selects a new primary cell, it will detect that it belongs to a different Location Area (through the Location Area Identity that each cell is broadcasting) from that of its previously selected primarily cell. The mobile terminal will therefore then send a location area update request to the core network 12.

With this background in mind, implementations of the embodiments of the invention will now be described, in relation to the situation of a subscriber using mobile terminal 1 to initiate a Location Based Service (LBS).

When a user wishes to use the mobile terminal to initiate a LBS, the terminal will transfer from idle mode to active or dedicated mode, and commence the set-up phase for the LBS session. There are three different cases where the RSS can be exploited for supporting a LBS service:

(a) Regular Case: In this case the terminal at the setup phase of a LBS (i.e. being in dedicated mode) measures the RSS of the primary and the neighbouring cells and uploads this information to the network. As the terminal is in dedicated mode it can also provide the Timing Advance (TA) parameter which is made available as soon as a communication channel is being setup to support the session. The network in this case can employ the "Enhanced Cell Global Identity" (ECGI) positioning technique to locate the terminal (i.e. exploit the serving cell information, the Timing Advance parameter and the RSS measurements for performing terminal positioning). Alternatively other hybrid positioning techniques can be applied by exploiting any other type of measurement from the cellular network or other technology (e.g. GPS) combined with the measured RSS and Timing Advance.

(b) STAMP (Statistical Terminal Assisted Mobile Positioning) concept:

while the terminal 1 is in idle mode it will be periodically measuring the RSS from its primary and neighbouring cells. It does this by measuring and storing, typically in a time-stamped list for a predefined size, the RSS measurements from its primary cell as well as neighbouring cells.

At the setup phase of the LBS the terminal uploads the list of the most recent RSS measurements together with a single TA measurement which was made available after the terminal entered the dedicated mode. The network exploits the time series of RSS measurements in order to derive a set of historical terminal positions and it has the option to exploit the TA measurement for providing an estimate of the current terminal position. Then through the application of statistical filtering of the resulting terminal position estimates the network can provide a refined and more accurate estimation of the current terminal position. In addition a wide variety of hybrid techniques can be identified in the case that STAMP concept is being exploited depending on additional parameters which can be monitored either in idle mode or in the dedicated mode.

(c) Mobile Terminal (MT) Tracking: this concept refers to a specific category of LBS in which after the setup of the LBS session the network continuously tracks the terminal position based on the regular RSS and TA measurements performed by the terminal. In this case either ECGI technique can be applied or any other hybrid technique which exploits the available RSS and TA measurements.

The expression "base station" is to be taken to encompass both standard macro base stations supporting multiple cells, and also micro or pico-cells as well as Access Points like femto-cells. The number of neighbouring cells being monitored by the mobile terminal usually varies from one up to six, depending on the location and the density of the cells. In an urban environment, the typical number of visible neighbouring cells can be six due to the high density of base stations. As base stations support one or more cells (typical number is three in a cellular network) the number of monitored neighbouring cells corresponds to one up to six different base stations.

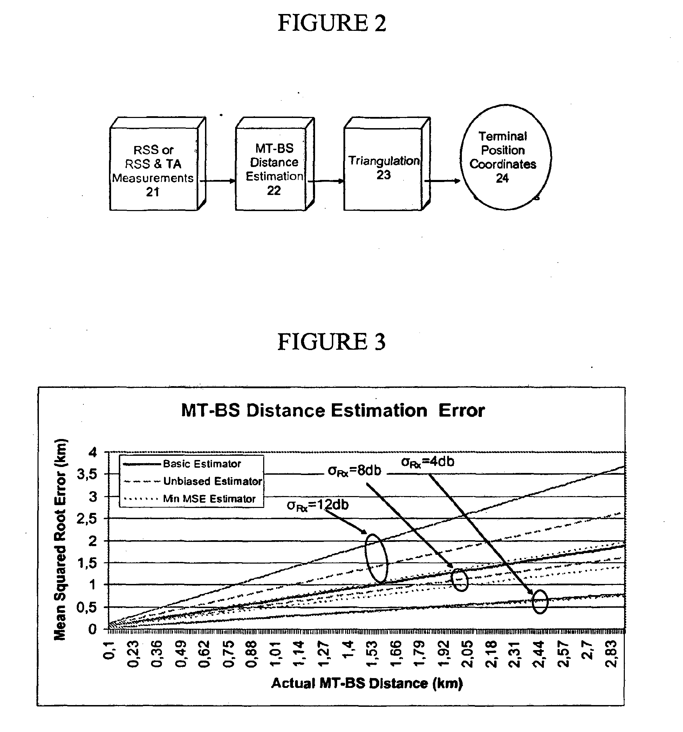

With reference to Figure 2, one process of calculating the mobile terminal position based on a single set of RSS measurements involves the following steps:

(a) Determination of RSS measurements (or RSS and Timing Advance (TA) measurements) (step 21);
(b) Mobile Terminal to Base Station (MT-BS) distance estimation, particularly based on path-loss empirical modes like Hata or Cost231 (step 22);
(c) Trilateration/Triangulation of the estimated distances between the Mobile Terminal and three different adjacent Base Stations (step 23); and
(d) Determination of the terminal position coordinates (step 24).

In mobile communications the RSS from a Base Station at a certain location is time-varying and consists of two main factors, namely:

i) the slow fading or local mean which is related to path loss and terrain nature. This factor is characterized by lognormal behavior; and
ii) the short-term or fast fading which is caused by multi-path effects. Rayleigh or Rician fading are the relevant models for fast fading, depending on whether there is line of sight or not, respectively.

According to standard mobile terminal operation, RSS is periodically measured and averaged over a given time period. In GSM measurements are made every 480msec while in dedicated mode and every 2-5 seconds while in idle mode.

For moving mobile terminals, fast fading can be smoothed-out by averaging over 2T=40-80 fade periods. The remaining slow fading component expressed in decibels can be modeled as a Gaussian random variable with a standard deviation in the order of 8db-12db. To eliminate the impact of slow fading the signal should be averaged for longer time periods corresponding to a distance of hundreds of wavelengths covered by a moving terminal (i.e. in the order of 100m-200m for 900MHz operation). In such a case the averaged signal provides the so-called "median component" which corresponds to the RSS which is a direct function of the path loss occurring due to the distance of the MT from the BS. Radio propagation loss models (e.g. Hata and Cost231) can then be exploited so as to estimate the distance between the MT and a BS. These models indicate that the MT-BS distance is a non-linear function of RSS, a fact that greatly affects the way that RSS errors are propagated to the estimation of MT positioning.

The following formulae illustrate the Hata and Cost231 models:

$$Hata: R_x(i) = -K(i) - [69,5 + 26,16\log(f(i)) - 13,82\log(h_{bs}(i)) + [44,9 - 6,55\log(h_{bs}(i))]\cdot\log(d(i)) - c(h_{mt})]$$
$$Cost\,231: R_x(i) = -K(i) - [46,33 + 33,9\log(f(i)) - 13,82\log(h_{bs}) + [44,9 - 6,55\log(h_{bs})]\cdot\log(d(i)) - a(h_{mt}) + c]$$

$$(1)$$

Where:

- $R_x(i)$ is the RSS from BS $i$ at the mobile terminal location x in dbm,
- $K(i)$ is the transmitting power of BS $i$ in dbm,
- $f(i)$ is the transmitter frequency in MHz,
- $h_{bs}(i)$ is the height of BS $i$ in m,
- $h_{mt}$ is the mobile terminal height in m,
- $d(i)$ is the MT-BS $i$ distance in km,
- $c(h_{mt}), \alpha(h_{mt})$ are environmental functions (e.g., urban, suburban) depending on the height of the mobile terminal and
- c is a model specific constant which depends on the radio propagation environment.

These path loss prediction models provide the RSS as a function of the distance of the MT from the BS.

The RSS based estimation of the distance between the MT and the BS is determined based on reverse calculations of the propagation path loss prediction models:

$$\hat{d}(i) = 10^{\left[\frac{\hat{R}_x(i)+A(i)}{B(i)}\right]}$$

Hata: $A(i) = K(i) + 69,5 + 26,16\log(f(i)) - 13,82\log(h_{bs}(i)) - c(h_{mt})$  (2)

Cost231: $A(i) = K(i) + 46,33 + 33,9\log(f(i)) - 13,82\log(h_{bs}(i)) - a(h_{mt}) + c$

$B(i) = 44,9 - 6,55\log(h_{bs}(i))$

Where:

$\hat{d}(i)$ is the resulting estimation of the distance between the MT and BS i,

$\hat{R}_x(i)$ is the measured RSS at the MT position x.

B(i): is defined here as a parameter to simplify the equations' analysis.

To illustrate the statistical behavior of the estimator provided in Eq. (2) we consider the following: in the case of the path-loss prediction model being properly calibrated for a specific geographical region then we can assume that RSS can be modeled as a Gaussian/Normal distributed random variable N. Based on Eq. (2) it can be concluded that the estimated MT-BS distance will follow a Lognormal (LN) distribution:

$$\hat{R}_x(i) \sim N(R_x(i), \sigma_{Rx}^2) \Rightarrow \hat{d}(i) \sim LN(\mu_d(i), \sigma_d^2(i))$$

$$\mu_d(i) = \ln[d(i)] = \ln\left[10^{\frac{R_x(i)+A(i)}{B(i)}}\right], \quad \sigma_d^2(i) = \left(\frac{\ln(10)}{B(i)}\right)^2 \sigma_{Rx}^2 = \beta(i) \cdot \sigma_{Rx}^2 \quad (3)$$

where $\sigma_{Rx}^2$ is the variance of the RSS Gaussian distribution, $\mu_d(i)$ and $\sigma_{Rx}^2$ is the mean value and the variance of the $\hat{d}(i)$ lognormal distribution respectively. Moreover $\beta(i)$ is defined here as a parameter to simplify the equations' analysis.

It should be noted that the notion $R_x(i)$ corresponds to the RSS value provided by Eq. (1) when the actual MT-BS distance d(i) is used. The distribution provided in Eq. (3) assumes that the error of the rest of the parameters involved in Eq. (1) is negligible compared to the RSS error. Moreover, the above equations apply for omni-directional cell antennas. From Eq. (2) the mean value E, the variance V and the Mean Squared Error (MSE) of the MT-BS distance can be estimated:

$$E(\hat{d}(i)) = d(i) \cdot e^{\beta(i)\frac{\sigma_{Rx}^2}{2}}$$

$$V(\hat{d}(i)) = d(i)^2 \cdot e^{\beta(i)\cdot\sigma_{Rx}^2} \cdot \left[e^{\beta(i)\cdot\sigma_{Rx}^2} - 1\right] \quad (4)$$

$$MSE(\hat{d}(i)) = E\left(\left[\hat{d}(i) - d(i)\right]^2\right) = d(i)^2 \cdot \left[e^{2\cdot\beta(i)\cdot\sigma_{Rx}^2} - 2\cdot e^{\beta(i)\frac{\sigma_{Rx}^2}{2}} + 1\right]$$

From Eq. (4), since the variance and the MSE are not equal, the MT-BS distance estimation provided in Eq. (2) is biased. This estimation is therefore not likely to provide much improvement in the distance estimation accuracy.

<u>Unbiased Distance Estimator</u>

According to a first embodiment of the invention, at a given MT-BS distance d(i), an unbiased distance estimator has been derived, as provided by the following equation:

$$\hat{d}_1(i) = c_1(i) \cdot \hat{d}(i) = e^{-\beta(i)\frac{\sigma_{Rx}^2}{2}} \cdot \hat{d}(i) = e^{-\beta(i)\frac{\sigma_{Rx}^2}{2}} \cdot 10^{\frac{\hat{R}_x(i)+A(i)}{B(i)}} \qquad (5)$$

Where $c_1(i) = e^{-\beta(i)\frac{\sigma_{Rx}^2}{2}}$ is the factor applied to the basic estimator so as to achieve the unbiased MT-BS distance

estimator and $\beta(i) = \left(\frac{\ln(10)}{B(i)}\right)^2 \cdot$ .

Indeed the mean value of the distance estimation becomes:

$$E(\hat{d}_1(i)) = e^{-\beta(i)\frac{\sigma_{Rx}^2}{2}} \cdot E(\hat{d}(i)) = d(i) \qquad (6)$$

The variance and the MSE in this case are equal (property of unbiased estimators):

$$V(\hat{d}_1(i)) = MSE(\hat{d}_1(i)) = d(i)^2 \cdot \left[e^{\beta(i)\sigma_{Rx}^2} - 1\right] \qquad (7)$$

Minimum Mean Squared Error (MSE) Distance Estimator

According to a second embodiment of the invention the minimum MSE MT-BS distance estimator can be achieved by the introduction of a factor $c_2(i)$ and the minimization of the following function:

$$MSE(\hat{d}_2(i)) = E\left(\left[\hat{d}_2(i) - d(i)\right]^2\right) = d^2(i) \cdot \left[c_2^2(i) \cdot e^{\beta(i)2\sigma_{Rx}^2} - 2c_2(i) \cdot e^{\beta(i)\frac{\sigma_{Rx}^2}{2}} + 1\right] \qquad (8)$$

The following equation shows that the MSE is optimized for the following value of $c_2(i)$:

$$c_2(i) = e^{-\beta(i)\frac{3\sigma_{Rx}^2}{2}} \quad \text{i.e.,} \quad \hat{d}_2(i) = e^{-\beta(i)\frac{3\sigma_{Rx}^2}{2}} \cdot 10^{\frac{\hat{R}_x(i)+A(i)}{B(i)}} \qquad (9)$$

For this estimator, the MSE, the mean value E and the variance V of the MT-BS distance are expressed as follows:

$$\min\{MSE(\hat{d}_2(i))\} = d^2(i) \cdot \left[1 - e^{-\beta(i)\sigma_{Rx}^2}\right]$$
$$E(\hat{d}_2(i)) = c_2(i) \cdot E(\hat{d}(i)) = d(i) \cdot e^{-\beta(i)\sigma_{Rx}^2} \qquad (10)$$
$$V(\hat{d}_2(i)) = c_2^2(i) \cdot V(\hat{d}(i)) = d^2(i) \cdot e^{-\beta(i)2\sigma_{Rx}^2} \cdot \left[e^{\beta(i)\sigma_{Rx}^2} - 1\right]$$

Figure 3 provides a comparison of the mean square root error of the MT-BS distance for three different $\sigma_{Rx}$ values (4db, 8db and 12db) for the following estimators:

(a) basic estimator (j=0, Eq. (2)),
(b) unbiased estimator (j=1, Eq. (5) first embodiment) and

(c) minimum MSE estimator (j=2, Eq. (9) second embodiment).

The index "j" has been arbitrarily assigned to assist in identifying the estimators in subsequent formulae. As it can be seen from Figure 3, even though the error increases with increasing values of RSS standard deviation $\sigma_{Rx}$, the unbiased estimator and the minimum MSE estimator, in particular, deliver significant improvement in the distance estimation error especially for high $\sigma_{Rx}$ values.

As can be seen from Figure 2, the distance determination is one component of the RSS based terminal positioning technique, with another component being trilateration/triangulation. Therefore this is another area where the calculations of the distance estimators may be refined to reduce the error in the positional estimation.

Triangulation Error Analysis

In this regard, triangulation is a geometrical method which uses estimated distances between the MT and three different BSs to provide the MT position. Trilateration is a related technique that, in addition to MT position, can determine MT speed and elevation.

Triangulation is expressed by the following equations:

$$(x - x_i)^2 + (y - y_i)^2 = d^2(i), \quad \text{for} \ i = 1,2,3 \tag{11}$$

Where (x,y) are the mobile terminal position coordinates and $(x_i, y_i)$ i=1,2,3 are the coordinates of the base stations (typically 3 required for triangulation calculations). By subtracting the 3rd equation (i=3) from the 1st (i=1) and the 2nd (i=2) from the 1st (i=1) we get:

$$-2x(x_1 - x_i) - 2y(y_1 - y_i) = d^2(1) - d^2(i) - x_1^2 + x_i^2 - y_1^2 + y_i^2, \ i=2,3 \tag{12}$$

From Eq. (12) it is feasible to estimate the terminal position (x,y) as follows:

$$x = \frac{2}{D}\left[-(y_2 - y_3)\cdot d^2(1) + (y_1 - y_3)\cdot d^2(2) - (y_1 - y_2)\cdot d^2(3) - (y_1 - y_2)\cdot(y_1^2 - y_3^2 + x_1^2 - x_3^2) + (y_1 - y_3)\cdot(y_1^2 - y_2^2 + x_1^2 - x_2^2)\right]$$

$$y = \frac{2}{D}\left[(x_2 - x_3)\cdot d^2(1) - (x_1 - x_3)\cdot d^2(2) + (x_1 - x_2)\cdot d^2(3) + (x_1 - x_2)\cdot(y_1^2 - y_3^2 + x_1^2 - x_3^2) - (x_1 - x_3)\cdot(y_1^2 - y_2^2 + x_1^2 - x_2^2)\right]$$

$$\tag{13}$$

Eq. (13), for simplicity, can also be written as:

$$z = \frac{1}{D}\left[\sum_{i=1}^{3} a_z(i)\cdot d^2(i) + \Omega_z\right] \quad , \ z=x,y \tag{14}$$

Where $\Omega_z$ and $a_z(i)$, i=1,2,3, z=x,y can be directly derived from Eq. (13) and D is provided by the following equation:

$$D = 4\cdot(x_1 - x_2)\cdot(y_1 - y_3) - 4\cdot(x_1 - x_3)\cdot(y_1 - y_2) = 4\cdot\begin{vmatrix} x_1 & y_1 & 1 \\ x_2 & y_2 & 1 \\ x_3 & y_3 & 1 \end{vmatrix} \tag{15}$$

Eq. (15) indicates that D is equal to 4 times the area of the triangle defined by the three BSs. It is clear that unless the three BSs are in the same line we have D≠0 which yields a unique solution in the triangulation problem described by Eq. (14). Note that this property applies for any set of distances d(i) i=1,2,3 even if there is error in their estimation. Therefore the employment of this approach is applicable to RSS and ECGI based positioning where the estimated distances between the MT and the three BSs definitely contain error.

The error of the MT position as estimated through triangulation is provided by the following equation:

$$\hat{z}_j = \frac{1}{D}\left[\sum_{i=1}^{3} a_z(i) \cdot \hat{d}_j^2(i) + \Omega_z\right] = z + \frac{1}{D}\left[\sum_{i=1}^{3} a_z(i) \cdot \left[\hat{d}_j^2(i) - d^2(i)\right]\right], \; z=x,y \qquad (16)$$

Where j is the index of the distance estimator (i.e. j=0 corresponds to basic distance estimator (Eq. 2)).

Assuming a given set of distances between the MT and three different BSs d(i) (i=1,2,3) the mean value E and the variance V of the estimated MT coordinates are the following (assuming that the random variables $\hat{d}_j(i)$, i=1,2,3 are independent):

$$E(\hat{z}_j) = z + \frac{1}{D}\left[\sum_{i=1}^{3} a_z(i) \cdot d^2(i) \cdot \left[c_j^2(i) \cdot e^{\beta(i)\cdot 2\cdot\sigma_{Rx}^2} - 1\right]\right], \; z=x, \; y \; \text{and} \; j=0,1,2 \qquad (17a)$$

$$V(\hat{z}_j) = \frac{1}{D^2}\left[\sum_{i=1}^{3} a_z^2(i) \cdot d^4(i) \cdot c_j^4(i) \cdot e^{\beta(i)\cdot 4\sigma_{Rx}^2} \cdot \left[e^{\beta(i)\cdot 4\sigma_{Rx}^2} - 1\right]\right], \; z=x, \; y \; \text{and} \; j=0,1,2 \qquad (17b)$$

And the MSE in the estimation of the terminal coordinates will be (z=x, y and j=0,1,2):

$$MSE(\hat{z}_j) = \frac{1}{D^2}\left[\sum_{i=1}^{3} a_z^2(i) \cdot d^4(i) \cdot \left[c_j^4(i) \cdot e^{8\beta(i)\sigma_{Rx}^2} - 2c_j^2(i) \cdot e^{2\beta(i)\sigma_{Rx}^2} + 1\right] + \sum_{i=1}^{3}\sum_{\substack{k=1 \\ k\neq i}}^{3} a_z(i) \cdot a_z(k) \cdot d^2(i) \cdot d^2(k) \cdot f_j(i,k)\right]$$

$$f_j(i,k) = \left[c_j^2(i) \cdot c_j^2(k) \cdot e^{2(\beta(i)+\beta(k))\sigma_{Rx}^2} - c_j^2(i) \cdot e^{2\beta(i)\sigma_{Rx}^2} - c_j^2(k) \cdot e^{2\beta(k)\sigma_{Rx}^2} + 1\right]$$

$$(18)$$

### Unbiased Terminal Coordinates Estimator

According to a third embodiment of the invention, a mobile terminal (MT) position estimator is provided, which is based on the trilateration/ triangulation process calculations. This estimator is defined so as to satisfy the following condition:

$$E(\hat{z}_3) = z \qquad (z=x,y)$$

where z (z=x, y) is the MT position (2- dimension) coordinates and $\hat{z}_3$ (z=x, y) correspond to the estimated MT position coordinates based on estimator 3.

To achieve an unbiased estimation of the MT positional coordinates (x, y), the following unbiased MT-BS distance estimator is introduced:

$$\hat{d}_3(i) = c_3(i) \cdot \hat{d}(i), \quad \text{with} \quad c_3(i) = e^{-\beta(i)\sigma_{Rx}^2} \qquad (19)$$

The mean value E, the variance V and the MSE of the MT co-ordinates estimation after triangulation becomes:

$$E(\hat{z}_3) = z, \qquad V(\hat{z}_3) = MSE(\hat{z}_3) = \frac{1}{D^2}\left[\sum_{i=1}^{3} a_z^2(i)\cdot d^4(i)\cdot\left[e^{4\beta(i)\cdot\sigma_{R_x}^2} - 1\right]\right], \; z=x,\,y$$

$$(20)$$

As expected the MSE equals the variance in this case due to the unbiased nature of the estimator.

Terminal Coordinates MSE Estimator

According to a fourth embodiment of the invention, a sub-optimal MSE estimator of the mobile terminal (MT) position is provided, which is based on the outcome of the triangulation process, using an appropriate distance estimator.

A sub-optimal estimator is based on Eq. (18), where the MSE of the MT coordinates estimation is reduced by minimizing the following quantities:

$$\min\left\{E\left[\left(\hat{d}^2(i) - d^2(i)\right)^2\right]\right\}, \; i=1,2,3 \qquad\qquad (21)$$

Based on Eq. (18) the minimization of the quantities of Eq. (21) takes place when the following estimator is applied:

$$\hat{d}_4(i) = c_4(i)\cdot\hat{d}(i), \; \text{with: } c_4(i) = e^{-3\beta(i)\cdot\sigma_{R_x}^2}, \; i=1,2,3 \qquad\qquad (22)$$

In this case the mean value and the variance of the estimated terminal coordinates will be:

$$E(\hat{z}_4) = z + \frac{1}{D}\sum_{i=1}^{3} a_z(i)\cdot d^2(i)\cdot\left[e^{-4\beta(i)\cdot\sigma_{R_x}^2} - 1\right]$$

$$V(\hat{z}_4) = \frac{1}{D^2}\sum_{i=1}^{3} a_z^2(i)\cdot d^4(i)\cdot e^{-8\beta(i)\cdot\sigma_{R_x}^2}\left[e^{4\beta(i)\cdot\sigma_{R_x}^2} - 1\right]$$

$$(23)$$

And the resulting MSE will be:

$$MSE(\hat{z}_4) = \frac{1}{D^2}\left[\sum_{i=1}^{3} a_z^2(i)\cdot d^4(i)\cdot\left[1 - e^{-4\beta(i)\cdot\sigma_{R_x}^2}\right]\right] +$$

$$+ \frac{1}{D^2}\sum_{\substack{k=1 \\ k\neq i}}^{3} a_z(i)\cdot a_z(k)\cdot d^2(i)\cdot d^2(k)\cdot\left[e^{-4[\beta(i)+\beta(k)]\cdot\sigma_{R_x}^2} - e^{-4\beta(i)\cdot\sigma_{R_x}^2} - e^{-4\beta(k)\cdot\sigma_{R_x}^2} + 1\right]^{z=x,\,y}$$

$$(24)$$

The estimator in Eq. 22 is sub-optimal as to optimally minimize the MSE of the MT coordinates the following set of simultaneous equations should apply:

$$\frac{\partial MSE(\hat{z}_j(i))}{\partial c_j(i)} = 0 \qquad z=x,\,y \text{ and } i=1,2,3 \qquad\qquad (25)$$

However, the resulting solution for $c_j(i)$ leads to a function of the actual MT-BS distances d(i) for which the parameters are not known, so Eq. 21 is not a practical solution.

Terminal Position Estimation Error

To illustrate the effectiveness of the unbiased terminal co-ordinates estimator, the error in the estimation of the terminal position will be analyzed based on the error introduced in the estimation of the terminal coordinates through the triangulation method using this estimator. In this regard the error based on terminal position can be estimated as:

$$\hat{e}_j = \sqrt{(\hat{x}_j - x)^2 + (\hat{y}_j - y)^2} = \sqrt{\Delta\hat{x}_j^2 + \Delta\hat{y}_j^2} \text{ , j=0,1,2,3,4} \tag{26}$$

As no obvious distribution for the above parameter can be derived an approximation through the following Rice distribution is considered:

$$\hat{e}_j \sim Rice\left(u_e(j), \sigma_e^2(j)\right) \tag{27}$$

The above approximation is based on the following assumptions: $\Delta\hat{x}_j$ and $\Delta\hat{y}_j$ are assumed to be independent random variables with Gaussian distribution with mean values $E(\Delta\hat{x}_j)$, $E(\Delta\hat{y}_j)$ respectively and common variance of $\sigma_e^2(j)$. The mean value and the variance of the MT positioning error can therefore be approximated as follows:

$$E(\hat{e}_j) = \sigma_e(j) \cdot \sqrt{\frac{\pi}{2}} \cdot L_{\frac{1}{2}}\left(-\frac{u_e^2(j)}{2\sigma_e^2(j)}\right)$$

$$V(\hat{e}_j) = 2\sigma_e^2(j) + u_e^2(j) - \frac{\pi\sigma_e^2(j)}{2} \cdot L_{\frac{1}{2}}^2\left(-\frac{u_e^2(j)}{2\sigma_e^2(j)}\right) \tag{28}$$

The parameter $u_e(j)$ is provided by the following equation:

$$u_e(j) = \sqrt{E(\Delta\hat{x}_j)^2 + E(\Delta\hat{y}_j)^2} \tag{29}$$

To estimate $u_e(j)$ for a given MT location (i.e. for given distances d(i), i=1,2,3), Eq. (16) can be exploited, which defines the error of the MT position as estimated through triangulation. Regarding parameter $\sigma_e^2(j)$, since the assumption of common variance for $\Delta\hat{x}_j$ and $\Delta\hat{y}_j$ is not valid the following approximation is applied from the definition of the error variance and Eqs. (26), (28):

$$V(\hat{e}_j) = E(\hat{e}_j^2) - E(\hat{e}_j)^2 = E\left(\Delta\hat{x}_j^2 + \Delta\hat{y}_j^2\right) - \frac{\pi\sigma_e^2(j)}{2} \cdot L_{\frac{1}{2}}^2\left(-\frac{u_e(j)}{2\sigma_e^2(j)}\right) \tag{30}$$

From Eqs. (28), (29), (30) we get:

$$\sigma_e^2(j) = \frac{1}{2}\left[V\left(\Delta\hat{x}_j\right) + V\left(\Delta\hat{y}_j\right)\right] \tag{31}$$

Parameters $V(\Delta\hat{x}_j)$ and $V(\Delta\hat{y}_j)$ for a given MT location are provided by Eq. (17) as:

$$V\left(\Delta\hat{z}_j\right) = V(\hat{z}_j - z) = V(\hat{z}_j) \text{ , } \mathbf{z=x,y} \tag{32}$$

The application of the unbiased MT coordinates estimator (j=3, see also Eq. (19)) leads to a zero average value for both $\Delta\hat{x}_3$ and $\Delta\hat{y}_3$. In this case $u_e(j)$ becomes also zero and the MT positioning error distribution can be approximated by a Rayleigh distribution.

To illustrate the effectiveness of the estimators, a simulation model has been developed. The model considered a geographical area with a set of base stations each supporting three cells, with each cell corresponding to a 120 degree sector of equal radius. During the simulation the position of the mobile terminal was randomly selected within this area and the RSS levels from each of the base stations estimated from the Hata model. A Gaussian white noise with variance $\sigma_{Rx}^2$ was then added to the resulting RSS and the mobile terminal coordinates estimation process undertaken, using the basis estimator (j=0), the unbiased estimator (j=1) and the minimum MSE estimator (j=2).

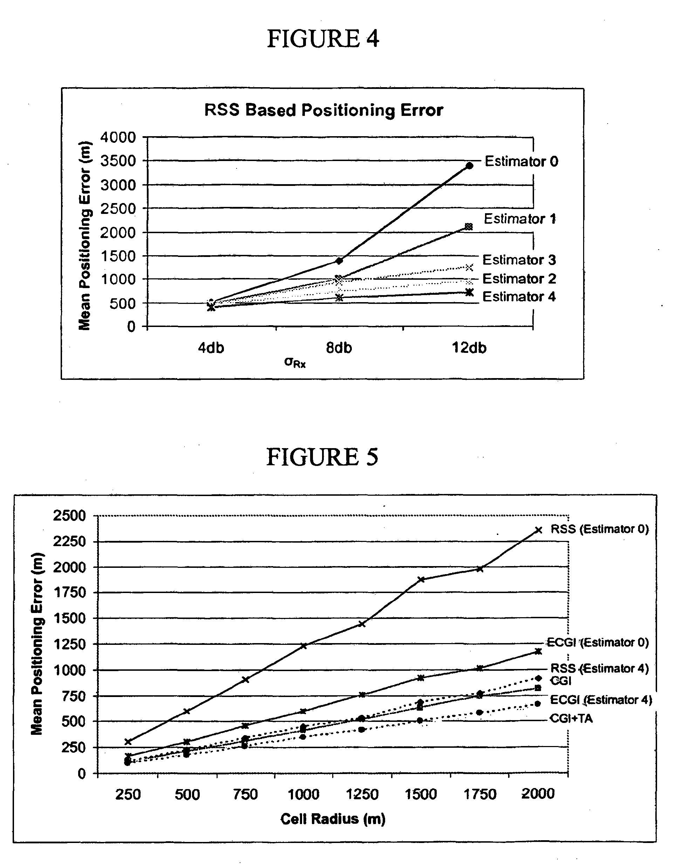

The estimated terminal position that was obtained was then compared with the actual terminal position to determine the positioning error (Eq. (26)) . In this regard, Figure 4 provides the resulting mean error of the mobile terminal position estimation using the various estimators presented in this paper (j=0, 1, 2, 3, 4) for a variety of $\sigma_{Rx}$ (4db, 8db and 12db) and for a cell radius of 1500m. To summarise the estimators shown in Figure 4:

> estimator 0 (j=0) is the basic biased distance estimator from Eq. 2;
> estimator 1 (j=1) is the unbiased distance estimator of Eq. 5;
> estimator 2 (j=2) is the Minimum MSE distance estimator of Eq. 9;
> estimator 3 (j=3) is the unbiased terminal coordinates estimator of Eq. 19; and
> estimator 4 (j=4) is the suboptimal terminal coordinates MSE estimator of Eq. 22.

Figure 4 indicates that the suboptimal MT coordinates MSE estimator (j=4) provides the best accuracy. Also, the minimum distance MSE estimator (j=2) outperforms unbiased MT coordinates estimator (j=3). It is clear from Figure 4 that significant improvement is achieved by the estimators of the present invention, especially for high values of RSS standard deviation ($\sigma_{Rx}$). However, even the best performing estimator (j=4) leads to an accuracy in the order of 500m.

In order to show the applicability of these estimators to RSS based positioning a set of alternative techniques have been analyzed, namely: CGI (Cell Global Identity), CGI+TA and ECGI.

According to the CGI technique only the Cell Identity is taken into account so it has been assumed that the MT is positioned at the centroid of the cell coverage.

In CGI+TA technique the distance between the MT and the BS is estimated based on the Timing Advance parameter. According to GSM specifications, the Timing Advance parameter is an integer with a range of 0 to 63 and allows the MT while in dedicated mode to estimate the correct transmission timing towards the BS. One Timing Advance unit corresponds to a distance of approximately 550m. Therefore, for this technique we have assumed that the Timing Advance corresponds to the delay exclusively caused by the MT-BS distance so that the distance is approximated by the following equation:

$$d_{TA} = TA \cdot 550m + \frac{550}{2}m \text{ , } TA=0,1,2,\ldots,63 \tag{33}$$

Therefore, in the CGI+TA technique the MT position has been assumed to be at a distance $d_{TA}$ and at an angle identical to the cell antenna azimuth.

In ECGI, the distance from the BS of the primary cell is also estimated based on the Timing Advance according to Eq. (33). Then based on RSS the distance from another two BSs is estimated and triangulation is applied. Therefore, the analysis for the RSS based MT-BS distance estimators also applies to the ECGI technique.

The accuracy of these techniques, namely CGI, CGI+TA, RSS based and ECGI is compared in Figure 5 for $\sigma_{Rx}$=8db. The RSS based techniques (i.e. RSS and ECGI) are provided for the basic and the best performing estimators (j=0 and j=4 respectively). Figure 5 indicates that RSS and ECGI techniques using the basic biased estimator provide less accuracy than the simpler techniques of CGI and CGI+TA. The basis estimator is therefore not a commercially attractive approach. The best performing estimator (j=4) significantly improves the performance of both RSS and ECGI based positioning however, the resulting accuracy is still in the order of accuracy provided by CGI and CGI+TA respectively. In this context, the commercial interest for applying either RSS based or ECGI based positioning is rather questionable.

Therefore, according to a further embodiment of the invention, the estimators are utilized in the STAMP technique described in GB2416461. In this regard, this technique collects a time series of RSS measurements while the MT is in idle mode. The terminal position estimation process according to the STAMP technique in this example is undertaken by applying an adaptive Kalman filter to the estimated terminal position coordinates (i.e. the output of the Figure 2 process) . The main assumption required by Kalman filter in this case, is that the difference between the estimated and the actual terminal coordinates follow a zero mean normal distribution. As shown in the analysis of the previous section of the paper this assumption can be approximated by using the MT- BS distance estimator which leads to unbiased estimation of the terminal coordinates (see Eq. (19) ) .

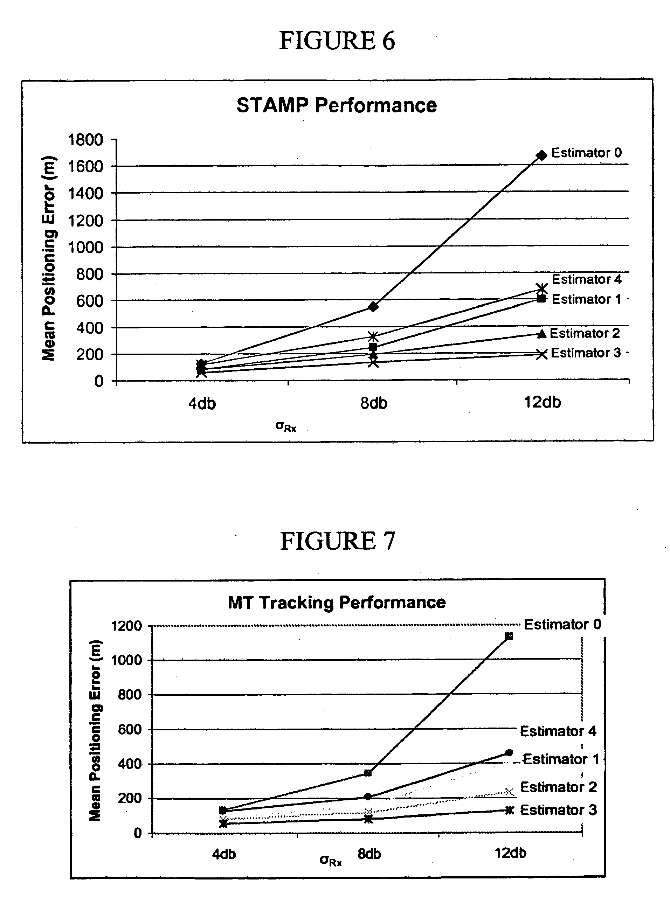

Figure 6 depicts the performance of the STAMP technique for the five different estimators (j=0 to 5). This graph shows estimator 3 (i.e. the Unbiased MT coordinates estimator) to be the best performing estimator, with a mean positioning error of the order of 200m (c.f. Figure 4 where the mean positioning error for the best estimator in RSS based positioning was of the order of 550m).

Figure 7 illustrates a graph showing the performance of the MT Tracking technique for each of the estimators j=1 to 4. As described earlier, MT Tracking is a technique in which after the setup phase of an LBS session the network constantly monitors the Mobile Terminal position exploiting the regular measurements of RSS and TA. Therefore compared to STAMP technique in MT tracking the RSS measurements are more frequent (every 480ms in GSM) and TA parameter is always available (as the terminal is in dedicated mode).

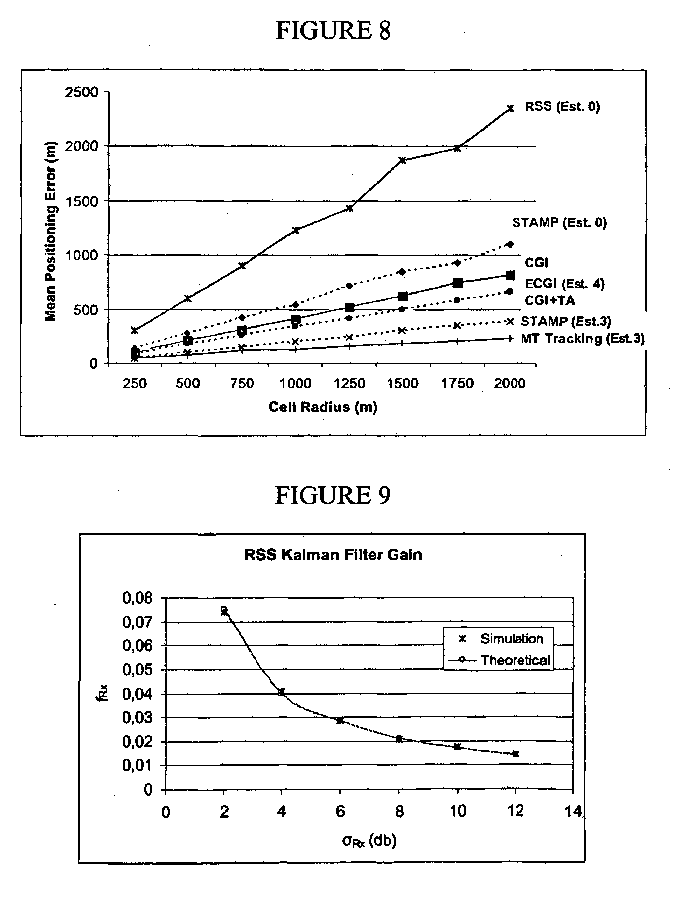

Figure 8 provides an overall comparison of the various techniques, showing the overall difference between the worst performing approach (i.e. RSS based positioning using Estimator 0) and the best performing techniques, STAMP and MT Tracking using Estimator 3.

More specifically, Figure 8 provides a comparison between the accuracy provided by RSS based positioning (Estimator 1), CGI, CGI+TA, ECGI (Estimator 4), STAMP (Estimator 0 and 3) and MT Tracking. As can be seen from this Figure, the performance of non-optimized STAMP (i.e. with Estimator 0) approaches the CGI method despite the fact that it delivers significant improvement of the plain RSS based positioning.

The optimized STAMP (i.e., when the unbiased MT coordinates estimator j=3 is exploited) clearly outperforms the CGI, CGI+TA and ECGI techniques. Moreover the resulting MT positioning accuracy for this optimised STAMP is in the range of 100m-200m even for high cell radius values (Figure 8) and also for high RSS standard deviation values (Figure 6). The performance of the STAMP technique corresponds to an improvement of about 50% in accuracy compared to the CGI, CGI+TA and ECGI techniques.

This shows that the optimised estimators used in conjunction with techniques like STAMP can provide advantageous results, and accordingly are likely to be very promising in terms of commercial exploitation. STAMP is a particularly advantageous technique, as it can be implemented solely using software modifications, which reduces deployment costs.

The accuracy of MT tracking based on estimator 3 (i.e. which uses estimator 3 for estimating the distances between the MT and the second and third BS and the known Tracking Area (TA) for the estimation of the distance from the first BS) is higher than optimized STAMP for two main reasons:

(a) the exploitation of TA which in our simulation model is considered to be always correct (something that is not always true in real networks) and
(b) the shorter sampling period applied in MT tracking (480msec for an active session in GSM compared to 2-5sec during the MT idle mode operation).

Overall, Figure 8 shows the empirical benefits that are achievable by the estimators of the present invention, particularly when combined with existing position determining techniques, such as STAMP and MT Tracking.

Although the analysis provided in the simulation model has used some assumptions which are not fully applicable in a real network (e.g. omni-directional antennas), it is believed that the model is nevertheless a good indication of the theoretical accuracy which can be achieved through RSS based positioning.

The estimators of these embodiments of the present invention have been derived, taking into account the nature of path-loss propagation models (like Hata and Cost231) and also the error introduced in the estimation of the MT-BS distance as well as the error introduced in the triangulation process. Advantageously the estimators have been shown, via Figures 6 to 8, to minimise the impact of the position calculation process on the resulting accuracy. The results indicate a very significant improvement in the RSS based positioning when applied to a single set of RSS measurements.

According to a further improvement of these embodiments of the invention, statistical filtering, ideally Kalman filtering or an equivalent recursive filter, is applied to the measurements/estimations used and derived in the position determining techniques using the estimators, in order to enhance their accuracy.

More specifically, in the following embodiments of the invention, the measurements/estimations in the terminal position estimation to which the Kalman filtering will be applied include the RSS measurements, the MT-BS distance estimation and the trilateration estimation.

The embodiments to be described below will derive the time series of RSS measurements using STAMP and MT Tracking, being the best performing position determining techniques from the above analysis.

In these embodiments of the invention, the following Kalman filtering function will be utilised, which assumes the true state X at time k is evolved from the state at (k-1):

$$\begin{aligned} X_k &= \Phi \cdot X_{k-1} + \Gamma \cdot W_k \\ Y_k &= M \cdot X_k + U_k \end{aligned} \qquad (34)$$

Where:

$\Phi$ is the state transition model applied to the previous state $X_{k-1}$;

$\Gamma$ is the control-input model which is applied to the control vector $W_k$;

$Y_k$ is a measurement (or observation) at time k of the true state $X_k$,

M is the observation model which maps the true state space into the observed space; and

$U_k$ is a random vector which represents the measurement noise.

Vectors $X_k$ and $Y_k$ may be represented as:

$$X_k = \begin{bmatrix} x_k(1) \\ \dots \\ x_k(N) \\ v_k(1) \\ \dots \\ v_k(N) \end{bmatrix}, \ Y_k = \begin{bmatrix} \hat{x}_k(1) \\ \dots \\ \hat{x}_k(N) \end{bmatrix} \qquad (35)$$

where N equals the number of base stations for which RSS measurements are derived.

The parameters defined in the vectors of Eq. (35) differ depending on the measurement/estimate to which the Kalman filter is applied. For instance, for:

(a) RSS Kalman filtering i = 1, 2, 3: $x_k(i) = R_x(i)$ the RSS from BS i, $v_k(i)$ is the rate of change of the RSS from BS i (i.e. the rate of change of $R_x(i)$ ) and $\hat{x}_k(i) = \hat{R}_x(i)$ is the measured RSS;

(b) MT-BS Distance Kalman Filtering i=1,2,3: $x_k(i) = d(i)$ the distance between the MT and BS i, $v_k(i)$ is the rate of change of d(i) and $\hat{x}_k(i) = \hat{d}(i)$ is the MT-BS distance estimated based on the measured RSS; and

(c) MT Coordinates Kalman Filtering i=1,2: $x_k(1)=x$, $x_k(2)=y$ the MT position coordinates, $v_k(1)= v_x(t_k)$, $v_k(2)= v_y(t_k)$ is the horizontal and vertical MT speed and $\hat{x}_k(1) = \hat{x}(t_k)$, $\hat{x}_k(2) = \hat{y}(t_k)$ is the MT coordinates estimated based on the measured RSS.

Moreover, $\phi$, $\Gamma$ and M are (2Nx2N), (2NxN) and (Nx2N) matrixes, respectively, that may be represented as follows:

$$\Phi = \begin{bmatrix} I_N & \Delta t \cdot I_N \\ O_N & I_N \end{bmatrix}, \ \Gamma = \begin{bmatrix} O_N \\ \Delta t \cdot I_N \end{bmatrix}, \ M = \begin{bmatrix} I_N & 0_N \end{bmatrix} \qquad (36)$$

Where $I_N$ is the NxN unitary matrix and $0_N$ is the zero NxN matrix and $\Delta t$ corresponds to the measurements sampling period. N is the number of measurements to be analysed. Typically, in RSS Kalman filtering N=3, in MT- BS Distance Kalman filtering N=3 and in MT Coordinates Kalman filtering N=2.

Further, $W_k$ is a zero mean Gaussian distributed random vector parameter which represents the process noise with a covariance matrix **Q**:

$$\mathbf{W_k} = \begin{bmatrix} w_1(t_k) \\ \cdots \\ w_N(t_k) \end{bmatrix}, \quad \mathbf{Q} = \begin{bmatrix} \sigma_\varrho^2(1) & 0 & \cdots & 0 \\ 0 & \sigma_\varrho^2(2) & \cdots & 0 \\ \cdots & \cdots & \cdots & \cdots \\ 0 & 0 & \cdots & \sigma_\varrho^2(N) \end{bmatrix} \qquad (37)$$

where $\sigma_\varrho^2(i)$ $(i=1,..,N)$ represents the variance of the RSS change rate of BS (i) (i.e. $v_k$ (i) ) :

And finally, $U_k$ is also a zero mean Gaussian random vector parameter which represents the measurement noise with a covariance matrix **R**:

$$\mathbf{U_k} = \begin{bmatrix} u_1(t_k) \\ \cdots \\ u_N(t_k) \end{bmatrix}, \quad \mathbf{R} = \begin{bmatrix} \sigma_R^2(1) & 0 & \cdots & 0 \\ 0 & \sigma_R^2(2) & \cdots & 0 \\ \cdots & \cdots & \cdots & \cdots \\ 0 & 0 & \cdots & \sigma_R^2(N) \end{bmatrix} \qquad (38)$$

Where, $\sigma_R^2$ (i) is the variance of the RSS measurements $\hat{x}_k$ (i) (i=1, ..., N) .

This Kalman Filtering function will now be used in conjunction with the different estimators described in the previous embodiments of the invention to illustrate how Kalman Filtering can be used to further optimise the MT positioning accuracy.

It is however to be appreciated that the analysis above which led to the estimators as described in Equations 5, 9, 19 and 22 cannot validly be applied directly to Kalman filtering. Therefore, properly revised estimators which optimise the MT position accuracy in the presence of Kalman filtering need to be devised.

In this regard, one of the key elements for understanding the role of Kalman filtering in the process of MT position estimation is the performance of the filtering process in steady state conditions. In order to have a convergent steady state behaviour the following conditions should hold:

(a) The pair {Φ, **M**} in the Kalman filter state-space of Eq. (34), should be completely observable:

$$rank \begin{bmatrix} \mathbf{\Phi} \\ \mathbf{M} \cdot \mathbf{\Phi} \\ \cdots \\ \mathbf{M} \cdot \mathbf{\Phi}^{N-1} \end{bmatrix} = 2N \qquad (39)$$

This condition can be shown to be valid based on the fact that:

$$\mathbf{M} \cdot \mathbf{\Phi}^m = \begin{bmatrix} \mathbf{I_N} & \mathbf{O_N} \end{bmatrix} \cdot \begin{bmatrix} \mathbf{I_N} & m \cdot \Delta t \cdot \mathbf{I_N} \\ \mathbf{O_N} & \mathbf{I_N} \end{bmatrix} = \begin{bmatrix} \mathbf{I_N} & m \cdot \Delta t \cdot \mathbf{I_N} \end{bmatrix}, \ (m=1,\dots,N-1)$$

$$(40)$$

(b) The pair {Φ,**G**$^{1/2}$} should be completely controllable:

$$rank \begin{bmatrix} \mathbf{G}^{1/2} & \mathbf{\Phi} \cdot \mathbf{G}^{1/2} & \cdots & \mathbf{\Phi}^{N-1} \cdot \mathbf{G}^{1/2} \end{bmatrix} = 2N \qquad (41)$$

Where:

$$G = G^{1/2} \cdot G^{T/2} = \Gamma \cdot Q \cdot \Gamma^T = \Delta t^2 \cdot \begin{bmatrix} O_N & O_N \\ O_N & Q \end{bmatrix} \qquad (42)$$

And therefore:

$$G^{1/2} = \Delta t \cdot \begin{bmatrix} O_N & O_N \\ O_N & Q^{1/2} \end{bmatrix}$$

$$G^{1/2} \cdot \Phi^m = \Delta t \cdot \begin{bmatrix} O_N & m \cdot \Delta t \cdot Q^{1/2} \\ O_N & Q^{1/2} \end{bmatrix} \qquad (43)$$

Eq. (41) can be proven to hold based on Eq. (43).

As both Eq. (39) and Eq. (43) hold for the Kalman filter state space of Eq. (34), then there is a unique positive solution P in the following algebraic Riccati equation:

$$P = \Phi \cdot P \cdot \Phi^T + G - \Phi \cdot P \cdot M^T \cdot \left( M \cdot P \cdot M^T + R \right)^{-1} \cdot M \cdot P \cdot \Phi^T \qquad (44)$$

The solution P of this algebraic Riccati equation determines the covariance matrix:

$$S = M \cdot P \cdot M^T + R \qquad (45)$$

And the Steady State Kalman gain K will be:

$$K = P \cdot M^T \cdot S^{-1} \qquad (46)$$

It is to be appreciated that the analytical solution of the Riccati Eq. (44) requires the estimation of the eigenvalues of the following matrix:

$$\begin{bmatrix} I_N & -P \end{bmatrix} \cdot F \cdot \begin{bmatrix} P \\ I_N \end{bmatrix} = 0 \qquad (47)$$

Where:

$$F = \begin{bmatrix} \Phi^{-1} & \Phi^{-1} \cdot G \\ -M^T \cdot R^{-1} \cdot M \cdot \Phi^{-1} & \Phi^T + M^T \cdot R^{-1} \cdot M \cdot \Phi^{-1} \cdot G \end{bmatrix} \qquad (48)$$

$$F = \begin{bmatrix} I_N & -\Delta t \cdot I_N & O_N & -\Delta t^3 \cdot Q \\ O_N & I_N & O_N & \Delta t^2 \cdot Q \\ -R^{-1} & \Delta t \cdot R^{-1} & I_N & -\Delta t^3 \cdot R^{-1} \cdot Q \\ O_N & O_N & \Delta t \cdot I_N & I_N \end{bmatrix} \tag{49}$$

In the analysis and simulation undertaken herein, an approximation of the Riccati Eq. (44) was obtained using the analytical software Matlab™.

Further, in defining the revised estimators the following set of assumptions regarding the impact of Kalman Filtering (KF) have been adopted:

(a) In terms of statistical behavior, the pdf (probability density function) of the Kalman Filtering output can be approximated by the pdf of the input parameter;
(b) in the steady state the mean value of the KF output will be equal to the mean value of the KF input:

$$E(\hat{x}_{k|k}) = E(x_k) \tag{50}$$

(c) in the steady state the variance of the KF output will be lower than the variance of the KF input representing the filter gain K:

$$V(\hat{x}_{k|k}) = (I_N - K \cdot M) \cdot V(x_k) \tag{51}$$

Based on the KF state space equations (34), the steady state variance of the KF output of Eq. (51) can be re-written as follows:

$$V(\hat{x}_{k|k}) = \begin{bmatrix} f(1) & 0 & ... & 0 \\ 0 & f(2) & ... & 0 \\ ... & ... & ... & ... \\ 0 & 0 & ... & f(N) \end{bmatrix} \cdot V(x_k) \tag{52}$$

Where $0 < f(i) < 1$ represents the steady state Kalman Filter gain K for parameter $x_k(i)$ (i=1, ..., N).

Such a Kalman Filtering will now be used in three different embodiments of the invention, namely with reference to Figure 2, being applied to the output of the RSS measurements 21 (Option A), the MT-BS Distance Estimation 22 (Option B) and the MT Position Coordinates Estimation after Trilateration 23 (Option C) and appropriate combined estimators defined.

**Option A: RSS Kalman Filter**

The measured RSS is considered to be following a Normal distribution:

$$\hat{R}_x(i) \sim N\left(R_x(i), \sigma_{Rx}^2\right) \tag{53}$$

This condition holds under the assumption that a common $\sigma_{Rx}^2$ applies for all Base Stations involved in the MT positioning. Based on this assumption it can be concluded that in the steady state the resulting series of filtered RSS measurements will follow a Normal distribution with the same mean and a lower variance:

$$\hat{R}_{xA}(i) \sim N\left(R_x(i), f_{Rx} \cdot \sigma_{Rx}^2\right) \qquad (54)$$

Figure 9 provides the Kalman Filter gain factor $f_{Rx}$ versus $\sigma_{Rx}$ based on the theoretical steady state KF performance, as well as according to the simulation which will be discussed below. This Figure shows that the simulation closely follows the theoretical performance, with the RSS KF gain decreasing exponentially as the standard deviation of the RSS measurements increases.

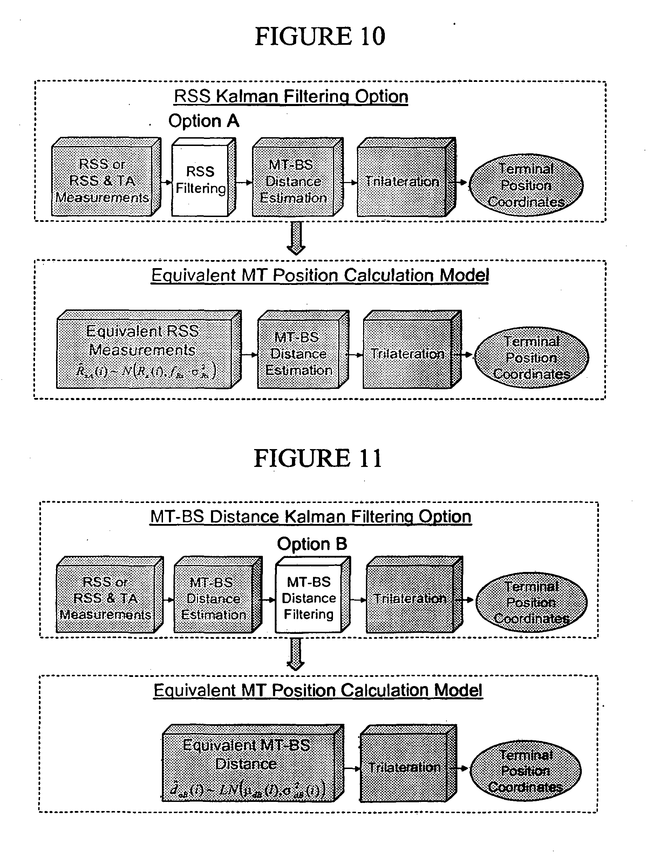

Based on the above analysis it is feasible to consider an MT position calculation process which incorporates RSS Kalman Filtering (option A - see Figure 10). As can be seen from Figure 10, in the simplified equivalent process model the impact of the Kalman Filter has been replaced with the proper statistical characteristics of equivalent RSS measurements. The validity of this equivalent model will be illustrated in the simulation which will be outlined below.

This model of Figure 10 can be used in order to produce the revised MT-BS distance estimators which fit the RSS Kalman Filtering (option A). In this regard, the revised MT-BS distance estimators in the case of RSS Kalman filtering will be the following:

    (a) Estimator 0: Basic estimator for MT-BS distance as provided by Eq (2).
    (b) Estimator 1: The Unbiased MT-BS distance estimator:

$$\hat{d}_{1A}(i) = e^{-\beta(i)\frac{f_{Rx}\sigma_{Rx}^2}{2}} \cdot \hat{d}_o(i) \qquad (55)$$

    (c) Estimator 2: The Minimum MT-BS distance MSE estimator:

$$\hat{d}_{2A}(i) = e^{-\beta(i)\frac{3f_{Rx}\sigma_{Rx}^2}{2}} \cdot \hat{d}_o(i) \qquad (56)$$

    (d) Estimator 3: The Unbiased MT coordinates estimator:

$$\hat{d}_{3A}(i) = e^{-\beta(i)f_{Rx}\sigma_{Rx}^2} \cdot \hat{d}_o(i) \qquad (57)$$

    (e) Estimator 4: The sub-optimal MT coordinates MSE estimator:

$$\hat{d}_{4A}(i) = e^{-3\beta(i) \cdot f_{Rx} \cdot \sigma_{Rx}^2} \cdot \hat{d}_o(i) \qquad (58)$$

It should be noted that a KF gain of $f_{Rx}=1$ corresponding to the case that Kalman Filtering is not applied, and the estimators defined above become equal to the estimators defined for the plain RSS MT positioning case (as defined in Equations 5, 9, 19 and 22).

**Option B: MT-BS Distance Kalman Filter**

This option incorporates filtering after the MT-BS distance estimation, as illustrated in Figure 11. Figure 11 also shows an equivalent simplified MT position calculation model where the Kalman Filter has been replaced with the proper statistical characteristics of MT-BS distances. The validity of this equivalent model will be illustrated in the simulation which will be outlined below.

This model of Figure 11 can be used in order to produce the revised distance estimators incorporating Kalman Filtering (option B). In this regard, the MT-BS distance is considered to follow a Log-normal distribution:

$$\hat{d}_o(i) \sim LN\left(\mu_d(i), \sigma_d^2(i)\right)$$

$$\mu_d(i) = \ln[d(i)] = \ln\left[10^{-\frac{R_x(i)+A(i)}{B(i)}}\right] \tag{59}$$

$$\sigma_d^2(i) = \beta(i) \cdot \sigma_{Rx}^2$$

The impact of Kalman filtering on the probability density function of the filter output can be approximated by the following:

$$\hat{d}_{oB}(i) \sim LN\left(\mu_{dB}(i), \sigma_{dB}^2(i)\right) \tag{60}$$

From the same analysis at the Kalman Filter steady state we should have:

$$E\left[\hat{d}_{oB}(i)\right] = E\left[\hat{d}_o(i)\right] \tag{61}$$

$$V\left[\hat{d}_{oB}(i)\right] = f_d(i) \cdot V\left[\hat{d}_o(i)\right] \tag{62}$$

Where $f_d(i)$ represents the Kalman filter gain.
From Eq. (61) we have:

$$e^{\mu_d(i)+\sigma_d^2(i)/2} = e^{\mu_{dB}(i)+\sigma_{dB}^2(i)/2} \tag{63}$$

And from Eq. (62):

$$e^{2\mu_d(i)+\sigma_d^2(i)} \cdot \left(e^{\sigma_d^2}-1\right) = f_d(i) \cdot e^{\mu_{dB}(i)+\sigma_{dB}^2(i)/2} \cdot \left(e^{\sigma_{dB}^2}-1\right) \tag{64}$$

Based on Eq. (63), Eq. (64) becomes:

$$f_d(i) \cdot \left(e^{\sigma_d^2(i)}-1\right) = \left(e^{\sigma_{dB}^2(i)}-1\right) \Rightarrow \sigma_{dB}^2(i) = \ln\left[1+f_d(i) \cdot \left(e^{\sigma_d^2(i)}-1\right)\right] \Rightarrow$$
$$\sigma_{dB}^2(i) = \ln\left[1+f_d(i) \cdot \left(e^{\beta(i)\sigma_{Rx}^2}-1\right)\right] \tag{65}$$

And based on Eq. (65) we get from Eq. (63):

$$\mu_{dB}(i) = \ln\left[d(i)\frac{e^{\beta(i)\sigma_{Rx}^2/2}}{\sqrt{1+f_d(i)\left(e^{\beta(i)\sigma_{Rx}^2}-1\right)}}\right] \tag{66}$$

This model can now be used in order to produce the revised MT-BS distance estimators which fit the MT-BS Distance KF option B.

Based on these results, it is possible to define the revised MT-BS distance estimators which are appropriate for this MT-BS Kalman filtering method.

(a) Estimator 0: Basic estimator for MT-BS distance: as provided by Eq (2).
(b) Estimator 1: The Unbiased MT-BS distance estimator is defined as follows:

$$d(i) = E\left[\hat{d}_{1B}(i)\right] = E\left[c_{1B}(i) \cdot \hat{d}_{oB}(i)\right] = c_{1B}(i) \cdot E\left[\hat{d}_{oB}(i)\right] = c_{1B}(i) \cdot E\left[\hat{d}_o(i)\right] = c_{1B}(i) \cdot e^{\beta(i)\frac{\sigma_{Rx}^2}{2}} \cdot d(i) \Rightarrow$$

$$c_{1B}(i) = e^{-\beta(i)\frac{\sigma_{Rx}^2}{2}} = c_1(i)$$

$$(67)$$

Therefore, the unbiased filtered MT-BS distance estimator is identical to the one applied for the case that no Kalman Filtering is applied (Eq. (5)) due to the fact that the Kalman Filtering does not affect the mean value according to the assumption of the previous section (Eq. 50)).

(c) Estimator 2: The Minimum MT-BS distance MSE estimator: defined as one that minimizes the following:

$$MSE\left(\hat{d}_{2B}(i)\right) = E\left(\left[\hat{d}_{2B}(i) - d(i)\right]^2\right) = c_{2B}^2(i) \cdot E\left(\hat{d}_{oB}^2(i)\right) - 2 \cdot d(i) \cdot c_{2B}(i) \cdot E\left(\hat{d}_{oB}(i)\right) + d^2(i)$$

$$(68)$$

From Eq. (64), the minimum MSE is achieved for the following estimator:

$$c_{2B}(i) = \frac{d(i) \cdot E\left(\hat{d}_{oB}(i)\right)}{E\left(\hat{d}_{oB}^2(i)\right)} = \frac{d^2(i) \cdot e^{\beta(i)\sigma_{Rx}^2/2}}{e^{2\mu'_d - 4\sigma'^2_d/2}} = \frac{d^2(i) \cdot e^{\beta(i)\sigma_{Rx}^2/2}}{d^2(i) \cdot e^{\beta(i)\sigma_{Rx}^2} \cdot \left[1 + f_d(i) \cdot (e^{\beta(i)\sigma_{Rx}^2} - 1)\right]} \Rightarrow$$

$$c_{2B}(i) = \frac{e^{-\beta(i)\sigma_{Rx}^2/2}}{\left[1 + f_d(i) \cdot (e^{\beta(i)\sigma_{Rx}^2} - 1)\right]}$$

$$(69)$$

So that estimator 2 is:

$$\hat{d}_{2B}(i) = \frac{e^{-\beta(i)\sigma_{Rx}^2/2}}{\left[1 + f_d(i) \cdot (e^{\beta(i)\sigma_{Rx}^2} - 1)\right]} \cdot \hat{d}_o(i) \qquad (70)$$

(d) Estimator 3: The Unbiased MT coordinates estimator: From the trilateration process analysis, in order to achieve the unbiased MT coordinates estimation the following condition should apply:

$$d^2(i) = E\left(\hat{d}_{3B}^2(i)\right) = c_{3B}^2(i) \cdot e^{2\mu'_d(i) + 4\sigma'^2_d(i)/2} = c_{3B}^2(i) \cdot d^2(i) \cdot e^{\beta(i)\sigma_{Rx}^2} \cdot \left[1 + f_d(i) \cdot \left(e^{\beta(i)\sigma_{Rx}^2} - 1\right)\right] \Rightarrow$$

$$c_{3B}(i) = \frac{e^{-\beta(i)\sigma_{Rx}^2/2}}{\sqrt{\left[1 + f_d(i) \cdot \left(e^{\beta(i)\sigma_{Rx}^2} - 1\right)\right]}}$$

$$(71a)$$

So that estimator 3 is:

$$\hat{d}_{3B}(i) = \frac{e^{-\beta(i)\cdot\sigma_{Rx}^2/2}}{\sqrt{\left[1+f_d(i)\cdot\left(e^{\beta(i)\cdot\sigma_{Rx}^2}-1\right)\right]}}\cdot\hat{d}_o(i) \tag{71b}$$

(e) Estimator 4: The sub-optimal MT coordinates MSE estimator:

According to the trilateration process analysis this estimator should minimize the following quantity:

$$\min\left\{E\left(\left[\hat{d}_{4B}^2(i)-d^2(i)\right]^2\right)\right\} = \min\left\{V\left(\hat{d}_{4B}^2(i)-d^2(i)\right)+E\left(\hat{d}_{4B}^2(i)-d^2(i)\right)\right\} \tag{72}$$

Based on the assumption that:

$$\hat{d}_{4B}(i) = c_{4B}(i)\cdot\hat{d}_{oB}(i) \tag{73}$$

the MSE minimization (Eq. (72)) is achieved for:

$$c_{4B}(i) = d(i)\cdot\sqrt{\frac{E\left(\hat{d}_o^2(i)\right)}{E\left(\hat{d}_o^2(i)\right)^2+V\left(\hat{d}_o^2(i)\right)}} \Rightarrow$$

$$c_{4B}(i) = \frac{e^{-\beta(i)\cdot\sigma_{Rx}^2/2}}{\sqrt{\left[1+f_d(i)\cdot\left(e^{-\beta(i)\cdot\sigma_{Rx}^2}-1\right)\right]^5}} \tag{74a}$$

So that estimator 4 is:

$$\hat{d}_{4B}(i) = \frac{e^{-\beta(i)\cdot\sigma_{Rx}^2/2}}{\sqrt{\left[1+f_d(i)\cdot\left(e^{-\beta(i)\cdot\sigma_{Rx}^2}-1\right)\right]^5}}\cdot\hat{d}_o(i). \tag{74b}$$

It should be noted that for a KF gain of $f_d(i)=1$ (corresponding to the case that Kalman Filtering is not applied at all and therefore no gain occurs) the above estimators become identical to the ones applicable for the non-filtered process (plain RSS based positioning), as defined in Equations 5, 9, 19 and 22.

**Option C: MT Coordinates Kalman Filter**

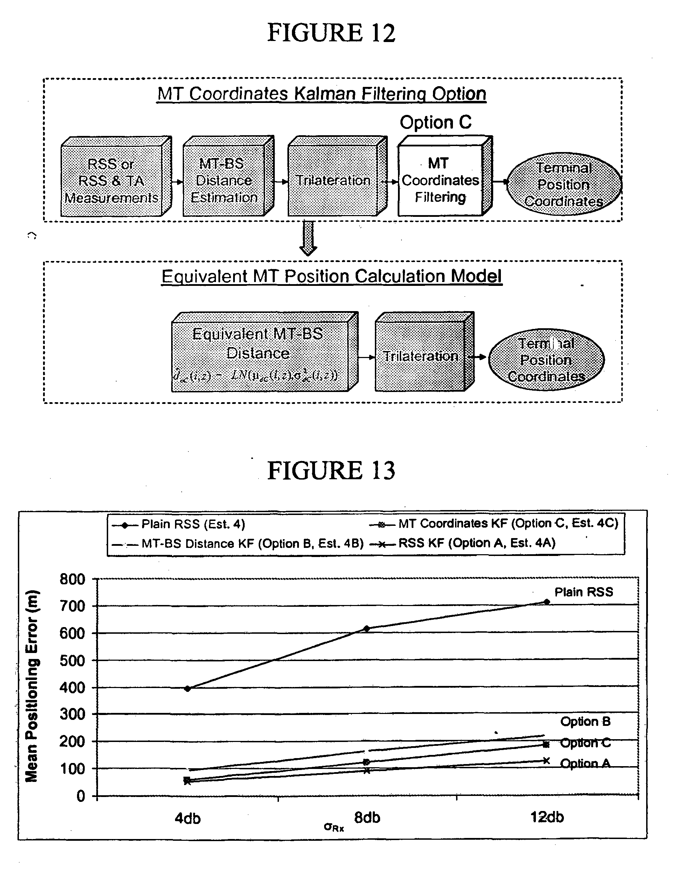

This option incorporates filtering after the trilateration step, as illustrated in Figure 12. Figure 12 also shows an equivalent simplified MT position calculation model where the Kalman Filter has been replaced with equivalent MT-BS distance statistical characteristics. The validity of this equivalent model will be illustrated in the simulation which will be outlined below.

This model of Figure 12 can be used in order to produce the revised estimators which fit the Kalman Filtering as per option C. In this regard, the MT coordinates (x,y) after the trilateration step can be expressed as follows:

$$\hat{z}_j = z + \frac{1}{D}\left[\sum_{i=1}^{3} a_z(i)\cdot\left[\hat{d}_j^2(i) - d^2(i)\right]\right], \ z=x,y \qquad (75)$$

Where for $(x_i, y_i)$ i=1,2,3 the coordinates of the Base Stations considered for the trilateration process are:

$$D = 4\cdot(x_1 - x_2)\cdot(y_1 - y_3) - 4\cdot(x_1 - x_3)\cdot(y_1 - y_2) \qquad (76)$$

$$a_x(1) = -(y_2 - y_3), \quad a_x(2) = (y_1 - y_3), \quad a_x(3) = -(y_1 - y_2) \qquad (77)$$

$$a_y(1) = (x_2 - x_3), \quad a_y(2) = -(x_1 - x_3), \quad a_y(3) = (x_1 - x_2) \qquad (78)$$

The probability density function of the MT coordinates is not known as it corresponds to a sum of Log-normal distributed parameters. Therefore, in this Kalman Filtering option we adopt the equivalent MT position calculation model depicted in Figure 12. As it can be seen from this Figure it is assumed that the equivalent MT position calculation model is based on a set of equivalent MT-BS distances which follow a Log-normal distribution with proper mean and variance parameters. To derive the characteristics of the equivalent MT-BS distances the following conditions, which are based on the assumptions presented in Equations (26) and (27) in regard to the steady state of the Kalman Filter, are exploited:

$$E\left(\hat{z}_{jC}\right) = E\left(\hat{z}_j\right), \ z=x,y \qquad (79)$$

$$V\left(\hat{z}_{jC}\right) = f_z \cdot V\left(\hat{z}_j\right), \ z=x,y \qquad (80)$$

In particular Eq. (79) leads to the following condition:

$$E\left(\hat{z}_{jC}\right) = E\left(\hat{z}_j\right) \Rightarrow \sum_{i=1}^{3} a_z(i)\cdot\left[E\left(\hat{d}_{oC}^2(i,z)\right) - E\left(\hat{d}_o^2(i)\right)\right] = 0, \ z=x,y \qquad (81)$$

And Eq. (80) leads to the following:

$$V\left(\hat{z}_{jC}\right) = f_z \cdot V\left(\hat{z}_j\right) \Rightarrow \sum_{i=1}^{3} a_z^2(i)\cdot\left[V\left(\hat{d}_{oC}^2(i,z)\right) - f_z \cdot V\left(\hat{d}_o^2(i)\right)\right] = 0, \ z=x,y \qquad (82)$$

One solution that justifies both conditions provided by Eqs. (81) and (82) is the following:

$$E\left(\hat{d}_{oC}^2(i,z)\right) = E\left(\hat{d}_o^2(i)\right), \ z=x,y \qquad (83)$$

$$V\left(\hat{d}_{oC}^2(i,z)\right) = f_z \cdot V\left(\hat{d}_o^2(i)\right), \ z=x,y \qquad (84)$$

Assuming that $\hat{d}_{oC}(i,z)$ follows a Log-Normal distribution $LN(\mu_{dC}(i,z),\sigma_{dC}^2(i,z))$ we have, based on Eq. (84):

$$V\left(\hat{d}_{oC}^2(i,z)\right)=f_z \cdot V\left(\hat{d}_o^2(i)\right)\Rightarrow E\left(\hat{d}_{oC}^2(i,z)\right)\cdot\left[e^{4\sigma_{dC}^2(i,z)}-1\right]=f_z \cdot E\left(\hat{d}_o^2(i)\right)\cdot\left[e^{4\beta(i)\sigma_{R_z}^2}-1\right],\ z=x,y$$

$$(85)$$

Therefore:

$$\sigma_{dC}^2(i,z)=\ln\left[\sqrt[4]{1-f_z \cdot\left(e^{4\beta(i)\sigma_{R_z}^2}-1\right)}\right],\ z=x,y \qquad (86)$$

In this case Eq. (83) leads to the following:

$$e^{2\mu_{dC}(i,z)+4\sigma_{dC}^2(i,z)/2}=d^2(i)\cdot e^{2\beta(i)\sigma_{R_z}^2}\Rightarrow$$

$$\mu_{dC}(i,z)=\ln\left[\frac{d(i)\cdot e^{\beta(i)\sigma_{R_z}^2}}{\sqrt[4]{1-f_z \cdot\left(e^{4\beta(i)\sigma_{R_z}^2}-1\right)}}\right],\ z=x,y \qquad (87)$$

The equivalent MT-BS distances are therefore a function of the Base Station i (i=1,2,3) as well as the Mobile Terminal coordinate z (z=x,y). This leads to different MT-BS distance estimators which can be used for the estimation of each of the MT coordinates according to this embodiment of the invention.

Therefore, based on the above analysis the revised MT- BS estimators for this embodiment of the invention are:

(a) Estimator 0: Basic Estimator: the one provided by Eq. (2).
(b) Estimator 1: Unbiased MT-BS distance estimator: defined as one which satisfies the following condition:

$$E(\hat{d}_{1C}(i,z))=d(i)\Rightarrow E(c_{1C}(i,z)\cdot\hat{d}_{oC}(i,z))=d(i)\Rightarrow c_{1C}(i,z)=\frac{d(i)}{E(\hat{d}_{oC}(i,z))},\ z=x,y$$

$$(88)$$

Based on Eq. (86) and (87) we have:

$$c_{1C}(i,z)=e^{-\beta(i)\sigma_{R_z}^2}\cdot\sqrt[8]{1+f_z \cdot\left(e^{4\beta(i)\sigma_{R_z}^2}-1\right)},\ z=x,y \qquad (89a)$$

So that estimator 1 is:

$$\hat{d}_{1C}(i)=e^{-\beta(i)\sigma_{R_z}^2}\cdot\sqrt[8]{1+f_z \cdot\left(e^{4\beta(i)\sigma_{R_z}^2}-1\right)}\cdot\hat{d}_o(i) \qquad (89b)$$

(c) Estimator 2: Minimum MT-BS distance MSE estimator: defined as one which minimizes the following condition:

$$MSE(\hat{d}_{2C}(i,z)) = E\left[\left(\hat{d}_{2C}(i,z) - d(i)\right)^2\right] = c_{2C}(i,z) \cdot E(\hat{d}_{oC}^2(i,z)) + d^2(i) - 2d(i)c_{2C}(i,z) \cdot E(\hat{d}_{oC}(i,z))$$

$$, z=x,y \quad (90)$$

The above condition is minimized for the following:

$$c_{2C}(i,z) = \frac{d(i) \cdot E(\hat{d}_{oC}(i,z))}{E(\hat{d}_{oC}^2(i,z))} = \frac{e^{-\beta(i)\sigma_{Rx}^2}}{\sqrt[8]{1 + f_z \cdot \left(e^{4\beta(i)\sigma_{Rx}^2} - 1\right)}}, z=x,y \quad (91a)$$

So that estimator 2 is:

$$\hat{d}_{2C}(i) = \frac{e^{-\beta(i)\sigma_{Rx}^2}}{\sqrt[8]{1 + f_z \cdot \left(e^{4\beta(i)\sigma_{Rx}^2} - 1\right)}} \cdot \hat{d}_o(i) \quad (91b)$$

(d) Estimator 3: Unbiased MT-coordinates Estimator: defined as one which satisfies the following condition:

$$E(\hat{z}_{3C}) = z \Rightarrow \sum_{i=1}^{3} a_z(i)\left[E(\hat{d}_{3C}^2(i,z)) - d^2(i)\right] = 0, z=x,y \quad (92)$$

A solution for the above condition is the following:

$$E(\hat{d}_{3C}^2(i,z)) = d^2(i) \Rightarrow E(c_{3C}^2(i,z) \cdot \hat{d}_{oC}^2(i,z)) = d^2(i) \Rightarrow$$

$$c_{3C}(i,z) = \frac{d(i)}{\sqrt{E(\hat{d}_{oC}^2(i,z))}} \quad , z=x,y \quad (93)$$

And based on Eqs. (86) and (87) the following estimator is obtained:

$$c_{3C}(i,z) = e^{-\beta(i)\sigma_{Rx}^2} = c_3(i), z=x,y \quad (94)$$

The above equation for the filtered Unbiased MT coordinates estimator is identical to the one applicable for plain RSS based positioning defined in Eq. (9).
(e) Estimator 4: Sub-optimal MT coordinates MSE estimator: defined as one which minimizes the following quantities:

$$MSE(\hat{d}_{4C}(i,z)) = E\left[\left(\hat{d}_{4C}^2(i,z) - d^2(i)\right)^2\right] = c_{4C}^4(i,z) \cdot E(\hat{d}_{oC}^4(i,z)) + d^4(i) - 2d^2(i)c_{4C}^2(i,z) \cdot E(\hat{d}_{oC}^2(i,z))$$

$$, z=x,y \quad (95)$$

The minimization of the above quantities can be achieved with the following:

$$c_{4C}(i,z)=d(i)\sqrt{\frac{E(\hat{d}_{oC}^2(i,z))}{E(\hat{d}_{oC}^4(i,z))}}=\frac{e^{-\beta(i)\sigma_{Rx}^2}}{\sqrt{1+f_z\cdot(e^{4\beta(i)\sigma_{Rx}^2}-1)}}, \quad z=x,y \qquad (96a)$$

So that estimator 4 is:

$$\hat{d}_{4C}(i)=\frac{e^{-\beta(i)\sigma_{Rx}^2}}{\sqrt{1+f_z\cdot(e^{4\beta(i)\sigma_{Rx}^2}-1)}}\cdot\hat{d}_o(i) \qquad (96b)$$

It is interesting to note that for a Kalman Filter gain of $f_z=1$ corresponding to the case that Kalman Filtering is not applied, the estimators defined for Option C become equal to the estimators defined for the plain RSS case as defined in Equations 5, 9, 19 and 22.

**Performance Analysis**

To analyze the performance of the various Kalman filtered MT-BS distance estimators (i.e from Options A, B and C), a simulation model will be illustrated. This simulation model is based on a mobile network with a geographical area having a set of Base Stations each supporting three cells of equal radius (each cell corresponds to a 120° sector of the geographic area). During the simulation, the position of the MT is randomly selected within this area and the RSS levels from each of the Base Stations are estimated from the Hata model. Also, a Gaussian white noise with variance $\sigma_{Rx}^2$ is added to the resulting RSS and a set of RSS measurements is produced at a period $\Delta t$.

Regarding MT mobility, a Manhattan grid street network is considered and the MT is moving at a speed which is selected uniformly in a range between 10km/hr-60km/hr (typical for an Urban environment). At each cross-road the motion direction of the MT is selected with equal probability from the possible alternative street segments, while the MT speed is reselected from the same range mentioned above. Based on the produced time series of RSS measurements, the MT positioning based on the alternative Kalman Filtering options is applied and the estimated MT position was then compared to the actual MT position to determine the positioning error.

In this regard, Tables 1, 2 and 3 provide the MT positioning error for the three different Kalman Filtering options versus the standard deviation of the measured RSS ($\sigma_{Rx}$). This is provided for both the original estimators (i.e. Estimators 0-4, without KF) and the revised MT-BS distance estimators (i.e. Estimators 1A-4A, 1B-4B and 1C-4C, with KF).

Table 1: The performance of the RSS Kalman filtering vs. the applied MT-BS distance estimator.

| $\sigma_{Rx}$ | | 4db | 8db | 12db |
|---|---|---|---|---|
| **Mean MT Positioning Error (m)** | **Estimator 0** | **73,4m** | **108,9m** | **154,9m** |
| | Estimator 1 | 73,7m | 192,6m | 337,2m |
| | Estimator 2 | 139,1m | 427,2m | 619,8m |
| | Estimator 3 | 112,3m | 320,5m | 523,4m |
| | Estimator 4 | 250,5m | 592,7m | 718,9m |
| | Estimator 1A | 54,3m | 96,1m | 165,6m |
| | Estimator 2A | 54,2m | 95,4m | 143,8m |
| | Estimator 3A | 53,2m | 90,7m | 151,1m |
| | **Estimator 4A** | **51,6m** | **89,3m** | **125,5m** |

Table 2: The performance of the MT-BS Distance Kalman filtering vs. the applied MT-BS distance estimator.

| $\sigma_{Rx}$ | | 4db | 8db | 12db |
|---|---|---|---|---|
| **Mean MT Positioning Error (m)** | Estimator 0 | 117,1m | 294,5m | 670,0m |
| | **Estimator 1 & 1B** | **97,3m** | **168,1m** | **248,0m** |
| | Estimator 2 | 128,5m | 312,5m | 516,0m |
| | Estimator 3 | 105,2m | 227,9m | 365,0m |
| | Estimator 4 | 221,3m | 542,3m | 695,0m |
| | Estimator 2B | 94,2m | 177,8m | 271,4m |
| | Estimator 3B | 106,0m | 178,2m | 272,2m |
| | **Estimator 4B** | **103,4m** | **163,3m** | **219,6m** |

Table 3: The performance of the MT Coordinates Kalman filtering vs. the applied MT-BS distance estimator.

| $\sigma_{Rx}$ | | 4db | 8db | 12db |
|---|---|---|---|---|
| **Mean MT Positioning Error (m)** | Estimator 0 | 126,2m | 548,1 m | 1667,6m |
| | Estimator 1 | 83,3m | 257,7m | 703,5m |
| | Estimator 2 | 72,6m | 191,8m | 341,0m |
| | **Estimator 3 & 3C** | **68,8m** | **130,8m** | **207,1m** |
| | Estimator 4 | 69,0m | 160,2m | 232,7m |
| | Estimator 1C | 66,7m | 130,3m | 225,8m |
| | Estimator 2C | 62,7m | 124,9m | 208,3m |
| | **Estimator 4C** | **59,0m** | **120,3m** | **201,4m** |

These tables indicate that the MT-BS distance estimators with KF provide the means to improve MT positioning accuracy in all KF options. In particular the revised MT-BS distance estimators (estimators 4A, 4B and 4C) lead to the optimum performance.

It is interesting to note that in the case of MT-BS distance KF Option B, the performance of Estimator 1 which is identical to Estimator 1B (Unbiased MT-BS Distance Estimator) is very close to the optimum performing estimator (revised Estimator 4B).

A similar observation applies for MT Coordinates KF Option C regarding the performance of Estimator 3 which is identical to Estimator 3C (MT Coordinates Unbiased Estimator). The reason for this result is the way that Kalman Filtering affects the statistical characteristics of its input (see Eq. (50) and (51)): the Kalman Filtering output maintains the input mean value and reduces the input variance. In the case that the input of the KF is unbiased then the resulting positioning error becomes equivalent to the case of a lower $\sigma_{Rx}$. In such a case the performance of all estimators is converging as it can be seen from Tables 1, 2, and 3 for e.g. $\sigma_{Rx}$=4db.

On the other hand, in the case that the input of KF is biased then the resulting output maintains the bias of the input leading possibly to a higher error, although it has a lower variance (due to the KF gain). The best performing estimator (revised estimator 4A) for all KF options actually provides a sub-optimal solution to MT coordinates MSE by balancing the resulting bias and the variance.

Figure 13 compares the performance of the KF options based on their best performing estimator (4A, 4B and 4C respectively) as well as the performance of the plain RSS positioning (for Estimator 4). As it can be seen RSS Kalman filtering option A remains the best performing Kalman filtering option. Nevertheless, as can be seen from Figure 13, the resulting MT positioning accuracy for all KF options is in a range which is valid and acceptable for commercial exploitation (i.e. 100m-200m positioning error for $\sigma_{Rx}$=12db).

The above analysis provides the means to estimate these parameters based on the steady state KF characteristics. In a commercial implementation such parameters can be calculated off-line in order to reduce the real-time processing workload (particularly in regard to providing a good estimation of the KF gain factors).

An alternative simplified approach, which is applicable to MT-BS distance KF Option B and MT coordinates KF Option C, is to use the Estimators 1B and 3C (Eqs. (68) and (94) respectively), as they do not require the estimation of

27

KF gain parameters and yet, according to the above results, exhibit a performance very close to the best performing estimators.

With regard to applying more than one KF option, whilst such an approach is possible, it not been found to lead to a further improvement of MT positioning accuracy. The same applies in the case where the revised MT-BS distance estimators are used in addition to the revised KF estimators. This result is due to the fact that, where the output of a KF is used as an input to another KF then the second KF will not deliver the expected gain because its input does not exhibit one of the characteristics that allows KF to deliver gain: that is the series of input measurements should have measurement noise which is independent in each sample. This is a property which the output of the first KF does not have.

Therefore, in summary, the above analysis has illustrated the RSS based positioning accuracy optimization in the presence of Kalman filtering and has adapted the error optimization analysis of plain RSS MT positioning to define revised estimators for the following Kalman Filtering options: RSS Kalman filtering, MT- BS distance Kalman Filtering and MT coordinates Kalman filtering. After assessing the impact of Kalman filtering to MT positioning accuracy based on steady state analysis, a set of MT- BS estimators were derived for each of the Kalman Filtering options.

It is to be appreciated that the exact implementation of the Kalman filter as described herein is only to be considered illustrative, and that alternative Kalman configurations are within the scope of the invention. Further, although the use of a Kalman filter is a preferred implementation, alternative filters are possible, particularly other statistical recursive filters capable of estimating the state of a dynamic system. Examples of possible alternatives include Double Exponential Smoothing Filters and Dynamic Data Reconciliation filters.

Further, the Kalman filtering embodiments of the invention were illustrated only in relation to RSS measurements derived from the STAMP and MT Tracking position determining techniques, however the embodiments are applicable to any other tracking technique in which RSS measurements are collected, such as CGI, CGI+TA and ECGI.

Additionally, the embodiments of the invention have been described in relation to the mobile terminal monitoring and determining RSS measurements. This is not essential to the invention, and the same functionality may be implemented external to the terminal. For instance, the terminal may forward the RSS measurements to the core network for processing.

The above listed position estimation techniques are applicable to various network configurations including 2G, 3G and 4G networks.

Further, although the present invention has particularly applicability to RSS measurements, any other suitable parameter applying to communications between the mobile terminal and its adjacent base stations may be used (e.g. Observed Time Difference) as well as measurements associated to other technologies like GPS. More particularly, it is to be appreciated that the estimators according to the embodiments of the invention are particularly applicable to the RSS parameter because of its statistical nature, and other parameters with a similar error distribution.

## Claims

1. A method of estimating the location of a mobile terminal (1) in a mobile communications network having a plurality of base stations (3-5, 7-9), the method including:

   determining at least one signal parameter measurement for the mobile terminal in relation to each of the plurality of base stations;
   using the determined signal parameter measurements to obtain a first distance estimation of the mobile terminal from each of the plurality of base stations; and **characterised by**
   using at least one estimator on each of the first distance estimations to obtain a refined distance estimation of the mobile terminal (1) from each of the plurality of base stations $i$, such that the at least one estimator conforms to at least one of the following formats:

$$a) \quad \hat{d}_1(i) = e^{-\beta(i) \cdot \frac{\sigma_{Rx}^2}{2}} \cdot 10^{-\left[\frac{\hat{R}_x(i) + A(i)}{B(i)}\right]}$$

$$b) \quad \hat{d}_2(i) = e^{-\beta(i) \cdot \frac{3\sigma_{Rx}^2}{2}} \cdot 10^{\left[\frac{\hat{R}_x(i) + A(i)}{B(i)}\right]}$$

c) $\hat{d}_3(i) = e^{-\beta(i)\cdot\sigma_{Rx}^2} \cdot 10^{\left[\frac{\hat{R}_x(i)+A(i)}{B(i)}\right]}$

d) $\hat{d}_4(i) = e^{-3\beta(i)\cdot\sigma_{Rx}^2} \cdot 10^{\left[\frac{\hat{R}_x(i)+A(i)}{B(i)}\right]}$

using said plurality of refined distance estimations to obtain a positional estimation of the mobile terminal, and applying Kalman filtering to one of the determined signal parameter measurements, the refined distance estimations or the positional estimate of the mobile terminal, where:

$\hat{d}_{1..4}$ is the refined distance estimation in kilometres
$\sigma_{Rx}^2$ is the variance of the Received Signal Strength (RSS) Gaussian distribution,

$$\beta(i) = (\ln(10)/B(i))^2,$$

$$B(i) = 44.9 - 6.55 \log h_{bs}(i),$$

$$h_{bs}(i) \text{ is the height of Base Station } i \text{ in m,}$$

$A(i)$ is an estimation of a propagation path-loss quantity from Base Station $i$; and
$\hat{R}_x(i)$ is the measured Received Signal Strength (RSS) from Base Station $i$ at the terminal's actual location.

2. The method of claim 1 wherein the Kalman filtering is applied by adapting the at least one estimator so as to conform to at least one of the following formats:

a) $\hat{d}_{1A}(i) = e^{-\beta(i)\frac{f_{Rx}\cdot\sigma_{Rx}^2}{2}} \cdot \hat{d}_o(i);$

b) $\hat{d}_{2A}(i) = e^{-\beta(i)\frac{3f_{Rx}\sigma_{Rx}^2}{2}} \cdot \hat{d}_o(i);$

c) $\hat{d}_{3A}(i) = e^{-\beta(i)\cdot f_{Rx}\cdot\sigma_{Rx}^2} \cdot \hat{d}_o(i);$

d) $\hat{d}_{4A}(i) = e^{-3\beta(i)\cdot f_{Rx}\cdot\sigma_{Rx}^2} \cdot \hat{d}_o(i);$

e) $\hat{d}_{2B}(i) = \dfrac{e^{-\beta(i)\cdot\sigma_{Rx}^2/2}}{\left[1 + f_d(i)\cdot(e^{\beta(i)\cdot\sigma_{Rx}^2}-1)\right]} \cdot \hat{d}_o(i);$

$$\text{f) } \hat{d}_{3B}(i) = \frac{e^{-\beta(i)\cdot\sigma_{Rx}^2/2}}{\sqrt{\left[1+f_d(i)\cdot\left(e^{\beta(i)\cdot\sigma_{Rx}^2}-1\right)\right]}} \cdot \hat{d}_o(i);$$

$$\text{g) } \hat{d}_{4B}(i) = \frac{e^{-\beta(i)\cdot\sigma_{Rx}^2/2}}{\sqrt{\left[1+f_d(i)\cdot\left(e^{-\beta(i)\cdot\sigma_{Rx}^2}-1\right)\right]}} \cdot \hat{d}_o(i);$$

$$\text{h) } \hat{d}_{1C}(i) = e^{-\beta(i)\sigma_{Rx}^2} \cdot \sqrt[8]{1+f_z\cdot\left(e^{4\beta(i)\sigma_{Rx}^2}-1\right)} \cdot \hat{d}_o(i);$$

$$\text{i) } \hat{d}_{2C}(i) = \frac{e^{-\beta(i)\sigma_{Rx}^2}}{\sqrt[8]{1+f_z\cdot\left(e^{4\beta(i)\sigma_{Rx}^2}-1\right)}} \cdot \hat{d}_o(i); \text{ or}$$

$$\text{j) } \hat{d}_{4C}(i) = \frac{e^{-\beta(i)\sigma_{Rx}^2}}{\sqrt{1+f_z\cdot(e^{4\beta(i)\sigma_{Rx}^2}-1)}} \cdot \hat{d}_o(i)$$

where:

$f_{Rx}$, $f_d(i)$ and $f_z$ are Kalman filter gain factors; and

$\hat{d}_0(i)$ is a basic estimator, $\hat{d}_0(i) = 10^{-\frac{\hat{R}_x(i)+A(i)}{B(i)}}$.

3. The method of any one preceding claim wherein the at least one signal parameter measurement determined is a Received Signal Strength, RSS, measurement and a RSS based positioning technique is used to obtain the first distance estimation of the mobile terminal location.

4. The method of any one preceding claim wherein the at least one signal parameter measurement determined is a Received Signal Strength, RSS, measurement, and the RSS measurements are determined from historical terminal positions collected while the terminal was in idle mode.

5. The method of any one of claims 1 to 3, wherein the at least one signal parameter measurement determined further includes Timing Advance measurements, which are determined by the mobile terminal while the terminal is active.

6. The method of any one preceding claim wherein the propagation path-loss quantity is estimated using a Hata model or a Cost231 model.

7. The method of any one preceding claim further including using the distance estimations in trilateration/triangulation calculations to estimate the location of the mobile terminal.

8. A mobile terminal configured to perform a method according to any one of method claims 1 to 7.

9. A communications network element configured to perform a method according to any one of method claims 1 to 7.

10. A mobile telecommunications network configured to perform a method according to any one of method claims 1 to 7.

**Patentansprüche**

1. Verfahren zum Schätzen des Ortes eines mobilen Endgeräts (1) in einem mobilen Kommunikationsnetz mit mehreren Basisstationen (3-5, 7-9), wobei das Verfahren Folgendes beinhaltet:

Ermitteln wenigstens eines Signalparametermesswertes für das mobile Endgerät in Bezug auf jede der mehreren Basisstationen;
Benutzen der ermittelten Signalparametermesswerte zum Erhalten einer ersten Entfernungsschätzung zwischen dem mobilen Endgerät und jeder der mehreren Basisstationen; und **gekennzeichnet durch**:

Benutzen wenigstens eines Schätzglieds an jeder der ersten Entfernungsschätzungen zum Erhalten einer verfeinerten Entfernungsschätzung zwischen dem mobilen Endgerät (1) und jeder der mehreren Basisstationen $i$, so dass das wenigstens eine Schätzglied wenigstens einem der folgenden Formate entspricht:

$$\text{a)} \quad \hat{d}_1(i) = e^{-\beta(i)\cdot\frac{\sigma_{Rx}^2}{2}} \cdot 10^{-\left[\frac{\hat{R}_x(i)+A(i)}{B(i)}\right]}$$

$$\text{b)} \quad \hat{d}_2(i) = e^{-\beta(i)\cdot\frac{3\sigma_{Rx}^2}{2}} \cdot 10^{-\left[\frac{\hat{R}_x(i)+A(i)}{B(i)}\right]}$$

$$\text{c)} \quad \hat{d}_3(i) = e^{-\beta(i)\cdot\sigma_{Rx}^2} \cdot 10^{-\left[\frac{\hat{R}_x(i)+A(i)}{B(i)}\right]}$$

$$\text{d)} \quad \hat{d}_4(i) = e^{-3\beta(i)\cdot\sigma_{Rx}^2} \cdot 10^{-\left[\frac{\hat{R}_x(i)+A(i)}{B(i)}\right]}$$

Benutzen der genannten mehreren verfeinerten Entfernungsschätzungen, um eine Positionsschätzung des mobilen Endgeräts zu erhalten, und
Anwenden einer Kalman-Filterung auf eines aus den ermittelten Signalparametermesswerten, den verfeinerten Entfernungsschätzungen und der Positionsschätzung des mobilen Endgeräts, wobei:

$\hat{d}_{1..4}$ die verfeinerte Entfernungsschätzung in Kilometern ist;
$\sigma_{Rx}^2$ die Varianz der gaußschen RSS-(Received Signal Strength)-Verteilung ist,

$$\beta(i) = (\ln(10)/B(i))^2$$

$$B(i) = 44.9\text{-}6.55\log h_{bs}(i),$$

$h_{bs}(i)$ die Höhe der Basisstation $i$ in Metern ist,

$A(i)$ eine Schätzung eines Ausbreitungspfadverlustmenge von Basisstation $i$ ist; und

$\hat{R}_x(i)$ die gemessene RSS (Received Signal Strength) von der Basisstation $i$ am tatsächlichen Ort des Endgeräts ist.

**2.** Verfahren nach Anspruch 1, wobei die Kalman-Filterung durch Adaptieren des wenigstens einen Schätzglieds angewandt wird, so dass es wenigstens einem der folgenden Formate entspricht:

$$\text{a) } \hat{d}_{1A}(i) = e^{-\beta(i)\frac{f_{Rx}\cdot\sigma_{Rx}^2}{2}} \cdot \hat{d}_o(i);$$

$$\text{b) } \hat{d}_{2A}(i) = e^{-\beta(i)\frac{3f_{Rx}\sigma_{Rx}^2}{2}} \cdot \hat{d}_o(i);$$

$$\text{c) } \hat{d}_{3A}(i) = e^{-\beta(i)\cdot f_{Rx}\cdot\sigma_{Rx}^2} \cdot \hat{d}_o(i);$$

$$\text{d) } \hat{d}_{4A}(i) = e^{-3\beta(i)\cdot f_{Rx}\cdot\sigma_{Rx}^2} \cdot \hat{d}_o(i);$$

$$\text{e) } \hat{d}_{2B}(i) = \frac{e^{-\beta(i)\cdot\sigma_{Rx}^2/2}}{\left[1 + f_d(i)\cdot(e^{\beta(i)\cdot\sigma_{Rx}^2} - 1)\right]} \cdot \hat{d}_o(i);$$

$$\text{f) } \hat{d}_{3B}(i) = \frac{e^{-\beta(i)\cdot\sigma_{Rx}^2/2}}{\sqrt{\left[1 + f_d(i)\cdot\left(e^{\beta(i)\cdot\sigma_{Rx}^2} - 1\right)\right]}} \cdot \hat{d}_o(i);$$

$$\text{g) } \hat{d}_{4B}(i) = \frac{e^{-\beta(i)\cdot\sigma_{Rx}^2/2}}{\sqrt{\left[1 + f_d(i)\cdot\left(e^{-\beta(i)\cdot\sigma_{Rx}^2} - 1\right)\right]^5}} \cdot \hat{d}_o(i);$$

$$\text{h) } \hat{d}_{1C}(i) = e^{-\beta(i)\sigma_{Rx}^2} \cdot \sqrt[8]{1 + f_z\cdot\left(e^{4\beta(i)\sigma_{Rx}^2} - 1\right)} \cdot \hat{d}_o(i);$$

$$\text{i) } \hat{d}_{2C}(i) = \frac{e^{-\beta(i)\sigma_{Rx}^2}}{\sqrt[8]{1 + f_z\cdot\left(e^{4\beta(i)\sigma_{Rx}^2} - 1\right)}} \cdot \hat{d}_o(i); \text{ or}$$

$$\text{j) } \hat{d}_{4C}(i) = \frac{e^{-\beta(i)\sigma_{Rx}^2}}{\sqrt{1 + f_z\cdot\left(e^{4\beta(i)\sigma_{Rx}^2} - 1\right)}} \cdot \hat{d}_o(i)$$

wobei:

$f_{\text{Rx}}$, $f_d(i)$ und $f_z$ Kalman-Filter-Verstärkungsfaktoren sind; und

$\hat{d}_0(i)$ ein Grundschätzglied ist, $\quad \hat{d}_0(i) = 10 \text{ m} \cdot 10^{-\frac{\hat{R}_x(i)+A(i)}{B(i)}}$ .

3. Verfahren nach einem vorherigen Anspruch, wobei der wenigstens eine ermittelte Signalparametermesswert ein RSS-(Received Signal Strength)-Messwert ist und eine RSS-basierte Positionsermittlungstechnik zum Erhalten der ersten Entfernungsschätzung des Ortes des mobilen Endgeräts benutzt wird.

4. Verfahren nach einem vorherigen Anspruch, wobei der wenigstens eine ermittelte Signalparametermesswert ein RSS-(Received Signal Strength)-Messwert ist und die RSS-Messwerte von historischen Endgerätepositionen ermittelt werden, die gesammelt werden, während sich das Endgerät im Ruhemodus befindet.

5. Verfahren nach einem der Ansprüche 1 bis 3, wobei der wenigstens eine ermittelte Signalparametermesswert Timing-Advance-Messwerte beinhaltet, die von dem mobilen Endgerät ermittelt werden, während das Endgerät aktiv ist.

6. Verfahren nach einem vorherigen Anspruch, wobei die Ausbreitungspfadverlustmenge mit einem Hata-Modell oder einem Cost231-Modell geschätzt wird.

7. Verfahren nach einem vorherigen Anspruch, das ferner die Benutzung der Entfernungsschätzungen in Trilaterations-/Triangulationsberechnungen beinhaltet, um den Ort des mobilen Endgeräts zu schätzen.

8. Mobiles Endgerät, das zum Ausführen eines Verfahrens nach einem der Ansprüche 1 bis 7 konfiguriert ist.

9. Kommunikationsnetzelement, das zum Ausführen eines Verfahrens nach einem der Verfahrensansprüche 1 bis 7 konfiguriert ist.

10. Mobiles Telekommunikationsnetz, das zum Ausführen eines Verfahrens nach einem der Verfahrensansprüche 1 bis 7 konfiguriert ist.

**Revendications**

1. Procédé d'estimation de la position d'un terminal mobile (1) dans un réseau de communications mobiles comportant une pluralité de stations de base (3-5, 7-9), le procédé comportant :

   la détermination d'au moins une mesure de paramètre de signal du terminal mobile relativement à chacune de la pluralité de stations de base ;
   l'utilisation des mesures de paramètres de signal déterminées pour obtenir une première estimation de distance du terminal mobile par rapport à chacune de la pluralité de stations de base ; et **caractérisé par**
   l'utilisation d'au moins un estimateur sur chacune des premières estimations de distance pour obtenir une estimation de distance affinée du terminal mobile (1) par rapport à chacune de la pluralité de stations de bases i, de telle sorte que l'au moins un estimateur soit conforme à au moins l'un des formats suivants :

$$\text{a)} \quad \hat{d}_1(i) = e^{-\beta(i)\frac{\sigma_{Rx}^2}{2}} \cdot 10^{-\left[\frac{\hat{R}_x(i)+A(i)}{B(i)}\right]}$$

b) $\quad \hat{d}_2(i) = e^{-\beta(i) \cdot \frac{3\sigma_{Rx}^2}{2}} \cdot 10^{\left[\frac{\hat{R}_x(i)+A(i)}{B(i)}\right]}$

c) $\quad \hat{d}_3(i) = e^{-\beta(i) \cdot \sigma_{Rx}^2} \cdot 10^{-\left[\frac{\hat{R}_x(i)+A(i)}{B(i)}\right]}$

d) $\quad \hat{d}_4(i) = e^{-3\beta(i) \cdot \sigma_{Rx}^2} \cdot 10^{\left[\frac{\hat{R}_x(i)+A(i)}{B(i)}\right]}$

l'utilisation de ladite pluralité d'estimations de distance affinées pour obtenir une estimation de position du terminal mobile, et

l'application d'un filtrage de Kalman à l'une des mesures de paramètres de signal déterminées, des estimations de distance affinées ou de l'estimation de position du terminal mobile, où :

$\hat{d}_{1...4}$ est l'estimation de distance affinée en kilomètres

$\sigma_{Rx}^2$ est la variance de la distribution gaussienne de la Force de Signal Reçue (RSS),

$$\beta(i) = (\text{In } (10)/B(i))^2$$

$$B(i) = 44{,}9 - 6{,}55 \log h_{bs}(i),$$

$h_{bs}(i)$ est la hauteur de la Station de Base $i$ en mètres,

$A(i)$ est une estimation d'une quantité de perte de trajet de propagation depuis la Station de Base $i$ ; et

$\hat{R}_x(i)$ est la Force de Signal Reçue (RSS) depuis la Station de Base $i$ à la position effective du terminal.

2. Procédé selon la revendication 1 dans lequel le filtrage de Kalman est appliqué en adaptant l'au moins un estimateur de manière à se qu'il soit conforme à l'un des formats suivants :

a) $\hat{d}_{1A}(i) = e^{-\beta(i) \cdot \frac{f_{Rx} \cdot \sigma_{Rx}^2}{2}} \cdot \hat{d}_o(i);$

b) $\hat{d}_{2A}(i) = e^{-\beta(i) \cdot \frac{3 f_{Rx} \sigma_{Rx}^2}{2}} \cdot \hat{d}_o(i);$

c) $\hat{d}_{3A}(i) = e^{-\beta(i) \cdot f_{Rx} \cdot \sigma_{Rx}^2} \cdot \hat{d}_o(i);$

d) $\hat{d}_{4A}(i) = e^{-3\beta(i) \cdot f_{Rx} \cdot \sigma_{Rx}^2} \cdot \hat{d}_o(i);$

e) $\hat{d}_{2B}(i) = \dfrac{e^{-\beta(i)\cdot\sigma_{Rx}^2/2}}{\left[1 + f_d(i)\cdot(e^{\beta(i)\cdot\sigma_{Rx}^2} - 1)\right]}\cdot \hat{d}_o(i)\,;$

f) $\hat{d}_{3B}(i) = \dfrac{e^{-\beta(i)\cdot\sigma_{Rx}^2/2}}{\sqrt{\left[1 + f_d(i)\cdot\left(e^{\beta(i)\cdot\sigma_{Rx}^2} - 1\right)\right]}}\cdot \hat{d}_o(i)\,;$

g) $\hat{d}_{4B}(i) = \dfrac{e^{-\beta(i)\cdot\sigma_{Rx}^2/2}}{\sqrt{\left[1 + f_d(i)\cdot\left(e^{-\beta(i)\cdot\sigma_{Rx}^2} - 1\right)\right]}}\cdot \hat{d}_o(i)\,;$

h) $\hat{d}_{1C}(i) = e^{-\beta(i)\sigma_{Rx}^2}\cdot \sqrt[8]{1 + f_z\cdot\left(e^{4\beta(i)\sigma_{Rx}^2} - 1\right)}\cdot \hat{d}_o(i)\,;$

i) $\hat{d}_{2C}(i) = \dfrac{e^{-\beta(i)\sigma_{Rx}^2}}{\sqrt[8]{1 + f_z\cdot\left(e^{4\beta(i)\sigma_{Rx}^2} - 1\right)}}\cdot \hat{d}_o(i)\,;$ or

j) $\hat{d}_{4C}(i) = \dfrac{e^{-\beta(i)\sigma_{Rx}^2}}{\sqrt{1 + f_z\cdot(e^{4\beta(i)\sigma_{Rx}^2} - 1)}}\cdot \hat{d}_o(i)$

où :

$f_{Rx}$, $f_d(i)$ et $f_z$ sont les facteurs de gain du filtre de Kalman ; et

$\hat{d}_0(i)$ est un estimateur de base, $\hat{d}_0(i) = 10\,\text{m}^{-\frac{\hat{R}_x(i)+A(i)}{B(i)}}$ .

**3.** Procédé selon l'une quelconque des revendications précédentes, dans lequel l'au moins une mesure de paramètre de signal déterminée est une mesure de Force de Signal Reçue, RSS, et une technique de positionnement par RSS est utilisée pour obtenir la première estimation de distance de la position du terminal mobile.

**4.** Procédé selon l'une quelconque des revendications précédentes, dans lequel l'au moins une mesure de paramètre de signal déterminée est une mesure de Force de Signal Reçue, RSS, et les mesures RSS sont déterminées à partir de positions historiques du terminal collectées durant un mode inactif du terminal.

**5.** Procédé selon l'une quelconque des revendications 1 à 3, dans lequel l'au moins une mesure de paramètre de signal déterminée comporte en outre des mesures d'Avance de Cadencement, lesquelles sont déterminées par le terminal mobile durant un mode actif du terminal.

**6.** Procédé selon l'une quelconque des revendications précédentes, dans lequel la quantité de perte de trajet de propagation est estimée en utilisant un modèle Hata ou un modèle Cost231.

**7.** Procédé selon l'une quelconque des revendications précédentes, comportant en outre l'utilisation des estimations de distance dans des calculs de trilatération/triangulation pour estimer la position du terminal mobile.

**8.** Terminal mobile configuré pour exécuter un procédé selon l'une quelconque des revendications de procédé 1 à 7.

**9.** Elément de réseau de communications configuré pour exécuter un procédé selon l'une quelconque des revendications de procédé 1 à 7.

**10.** Réseau de télécommunications mobiles configuré pour exécuter un procédé selon l'une quelconque des revendications précédentes, de procédé 1 à 7.

**Figure 1**

# FIGURE 2

# FIGURE 3

## FIGURE 4

## FIGURE 5

# FIGURE 6

STAMP Performance

# FIGURE 7

MT Tracking Performance

# FIGURE 8

# FIGURE 9

# FIGURE 10

## RSS Kalman Filtering Option

### Option A

RSS or RSS & TA Measurements → RSS Filtering → MT-BS Distance Estimation → Trilateration → Terminal Position Coordinates

⇓

### Equivalent MT Position Calculation Model

Equivalent RSS Measurements
$\hat{R}_{iA}(t) \sim N\!\left(\bar{R}_i(t), f_{ih}, \sigma_{ih}^2\right)$ → MT-BS Distance Estimation → Trilateration → Terminal Position Coordinates

# FIGURE 11

## MT-BS Distance Kalman Filtering Option

### Option B

RSS or RSS & TA Measurements → MT-BS Distance Estimation → MT-BS Distance Filtering → Trilateration → Terminal Position Coordinates

⇓

### Equivalent MT Position Calculation Model

Equivalent MT-BS Distance
$\hat{d}_{aB}(t) \sim LN\!\left(\mu_{aB}(t), \sigma_{aB}^2(t)\right)$ → Trilateration → Terminal Position Coordinates

# FIGURE 12

MT Coordinates Kalman Filtering Option

Option C

RSS or RSS & TA Measurements → MT-BS Distance Estimation → Trilateration → MT Coordinates Filtering → Terminal Position Coordinates

Equivalent MT Position Calculation Model

Equivalent MT-BS Distance
$\hat{d}_{ec}(l,z) \sim LN(\mu_{dc}(l,z), \sigma^2_{dc}(l,z))$ → Trilateration → Terminal Position Coordinates

# FIGURE 13

—◆— Plain RSS (Est. 4)        —■— MT Coordinates KF (Option C, Est. 4C)
—·— MT-BS Distance KF (Option B, Est. 4B) —×— RSS KF (Option A, Est. 4A)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2416461 A
- EP 135393 A
- WO 2006096923 A
- WO 03071303 A

**Non-patent literature cited in the description**

- **OROOJI, M. et al.** *New Method for Estimation of Mobile Location Based on Signal Attenuation and Hata Model Signal Prediction,* 2005